# EUROPEAN PATENT APPLICATION

(11) **EP 3 546 287 A1**
(43) Date of publication of application: **02.10.2019**
(21) Application number: 19165802.0
(22) Date of filing: 28.03.2019
(51) Int. Cl.: B60P 3/20, F25D 19/00, F25D 29/00

(54) **REFRIGERATOR UNIT AND REFRIGERATION VEHICLE**

(30) Priority: 30.03.2018 JP 2018070201
(71) Applicant: MITSUBISHI HEAVY INDUSTRIES THERMAL SYSTEMS, LTD., 108-8215 Tokyo (JP)
(72) Inventor: HOSHI, Shintaro, TOKYO, 108-8215 (JP)
(74) Representative: Cabinet Beau de Loménie

(57) **Abstract**

A refrigeration vehicle includes a trailer which has a trailer body accommodating a cargo, a tractor which tows the trailer, and a refrigerator unit (14) which is provided on a front surface of a front wall of the trailer body disposed on the tractor side and cools an inside space of the trailer body, in which the refrigerator unit includes a refrigerator unit body (25) which has a box body (41) provided in an upper portion of the front surface of the front wall and a control board (48) accommodated in the box body, a controller (31) which is disposed on the front surface of the front wall positioned on a lower portion of the refrigerator unit body, is electrically connected to the control board, and includes an operation panel (31a), and a position adjustor (29) which adjusts a position of the controller with respect to the refrigerator unit body such that the controller does not protrude from the refrigerator unit body when the refrigerator unit body is viewed from above.

## Description

### BACKGROUND OF THE INVENTION

### Field of the Invention

The present invention relates to a refrigerator unit and a refrigeration vehicle.

### Description of Related Art

For example, a refrigeration vehicle includes a trailer which has a trailer body, a tractor which tows the trailer, and a refrigerator unit which is disposed on a front surface side of a front wall of the trailer body and cools an inside space of the trailer body (refer to Japanese Unexamined Patent Application, First Publication No. 2017-20671).

For example, the refrigerator unit includes a box body which is disposed on a front surface of the front wall of the trailer body, a control board an external heat exchanger fan, an external heat exchanger, and a controller which are accommodated in the box body, and a decompression mechanism, an internal heat exchanger, and an internal heat exchanger fan which are disposed in the trailer body.

### SUMMARY OF THE INVENTION

An internal heat exchanger fan sucks air from below and blows a cold air from an upper side in the trailer body to an inside of the trailer body. Accordingly, in most cases, a refrigerator unit is disposed in an upper portion of a front surface of a front wall of the trailer body.

In this case, if the height from the ground to a box body is high, there is a possibility that work becomes difficult for a controller. Particularly, in a case where a height of the trailer body is high, the above-described problem easily occurs.

A screen of the controller faces in the same direction as that of the front surface of the front wall, and thus, there is a possibility that an operator can hardly operate the controller.

Accordingly, an object of the present invention is to provide a refrigerator unit and a refrigeration vehicle capable of improving an operability of the controller by the operator.

In order to achieve the object, according to an aspect of the present invention, there is provided a refrigeration vehicle including: a trailer which has a trailer body accommodating a cargo; a tractor which tows the trailer; and a refrigerator unit which is installed on a front surface of a front wall of the trailer body disposed on the tractor side and which cools an inside space of the trailer body, wherein the refrigerator unit includes a refrigerator unit body which has a box body provided in an upper portion of the front surface of the front wall and a control board accommodated in the box body, a controller which is disposed on the front surface of the front wall positioned on a lower portion of the refrigerator unit body, is electrically connected to the control board, and includes an operation panel, and a position adjustor which adjusts a position of the controller with respect to the refrigerator unit body such that the controller does not protrude from the refrigerator unit body when the refrigerator unit body is viewed from above.

According to the present invention, compared to a case where the controller is disposed in the box body, the controller which is electrically connected to the control board is disposed on the front surface of the front wall positioned on the lower portion of the refrigerator unit body, and thus, it is possible to decrease a height from the ground to the controller. Accordingly, the operator easily accesses the operation panel of the controller, and it is possible to improve operability of the controller by the operator.

The position adjustor which can adjust the position of the controller with respect to the refrigerator unit body is provided such that the controller does not protrude from the refrigerator unit body when the refrigerator unit body is viewed from above, and thus, it is possible to prevent the controller from colliding with the tractor, and it is possible to incline the operation panel of the controller in a direction in which the operator easily perform the operation or adjust a position of the controller in a height direction or a lateral direction. Accordingly, the operator easily accesses the controller, and it is possible to further improve the operability of the controller by the operator.

In the refrigeration vehicle according to the aspect of the present invention, the refrigeration vehicle may further include a support member which extends downward from the refrigerator unit body and supports the controller, and the position adjustor may be installed between the support member and the controller.

In this way, the refrigeration vehicle includes the support member which extends downward from the refrigerator unit body and supports the controller and the position adjustor which is installed between the support member and the controller, and thus, the operator can adjust the direction or the position of the operation panel of the controller.

Accordingly, the operator easily accesses the controller, and it is possible to further improve the operability of the controller by the operator.

In the refrigeration vehicle according to the aspect of the present invention, the position adjustor may include a first bracket which is fixed to a lower portion of the front surface of the front wall, and a second bracket to which the controller is fixed and of which a side opposite to a side to which the controller is fixed is fixed to the first bracket such that the operation panel of the controller is inclined with respect to the front surface of the front wall.

In this way, the position adjustor includes the first bracket which is fixed to a lower portion of the front surface of the front wall and the second bracket to which the controller is fixed and in which a side of opposite to a side to which the controller is fixed is fixed to the first bracket such that the operation panel of the controller is inclined with respect to the front surface of the front wall, and thus, it is possible to incline the operation panel of the controller in any direction of an upward direction, a downward direction, a left direction, and a right direction of the trailer body.

Accordingly, it is possible to change the direction of the controller in a direction in which the operator easily performs the operation, and it is possible to improve the operability of the controller by the operator.

In the refrigeration vehicle according to the aspect of the present invention, the first bracket may include a first fixed plate which is in contact with the front surface of the front wall and is fixed to the front wall and a first protrusion plate portion which protrudes in a direction toward the controller from a surface of the first fixed plate positioned on a side opposite to a surface of the first fixed plate which is in contact with the front surface of the front wall, the second bracket may include a second fixed plate to which the controller is fixed, and a second protrusion plate portion which protrudes in a direction toward the first fixed plate from a surface of the second fixed plate positioned on a side opposite to a surface of the second fixed plate to which the controller is fixed and has a surface overlapping one surface of two surfaces disposed in a thickness direction of the first protrusion plate portion, and the second protrusion plate portion may be fixed to the first protrusion plate portion by a bolt in a state of being inclined to the first protrusion plate portion.

The refrigeration vehicle has the above-described first and second brackets, the second protrusion plate portion and the first protrusion plate portion are fixed to each other by the bolt in the state where the second protrusion plate portion is inclined to the first protrusion plate portion, and thus, it is possible to incline the operation panel of the controller with respect to the front surface of the front wall.

In the refrigeration vehicle according to the aspect of the present invention, the first and second protrusion plate portions may be disposed to face each other in a height direction of the trailer body.

In this way, the first protrusion plate portion and the second protrusion plate portion are disposed to face each other in the height direction of the trailer body, and thus, it is possible to incline the operation panel of the controller in a left direction or a right direction of the trailer body.

In the refrigeration vehicle according to the aspect of the present invention, the first and second protrusion plate portions may be disposed to face each other in a width direction of the trailer body.

In this way, the first protrusion plate portion and second protrusion plate portion are disposed to face each other in a width direction of the trailer body, and thus, it is possible to incline the operation panel of the controller in an upward direction or a downward direction of the trailer body.

In the refrigeration vehicle according to the aspect of the present invention, the refrigeration vehicle may further include a harness which electrically connects the control board and the controller to each other, in which the control board may include a first connector, the controller may include a second connector on a side facing the second fixed plate, a third connector may be provided on one end portion of the harness so as to be mounted in a state of being detachably attached to the first connector, a fourth connector may be provided on the other end portion of the harness so as to be mounted in a state of being detachably attached to the second connector, and a penetrating portion which exposes the second connector may be formed in the second fixed plate.

In this way, the first connector, the second connector, the third connector, the fourth connector, and the harness are provided, the penetrating portion which exposes the second connector to the second fixed plate is formed, and thus, it is possible to mount the fourth connector on the second connector. Accordingly, it is possible to electrically connect the control board and the controller to each other.

A structure body including the third connector, the fourth connector, and the harness is installed between the first connector and the second connector, a plurality of structure bodies having different harness lengths are provided, and thus, it is possible to electrically connect the first connector and the second connector to each other by the structure body. Accordingly, it is possible to change the position of the controller with respect to the refrigerator unit body in a state where the control body and the controller are electrically connected to each other.

In the refrigeration vehicle according to the aspect of the present invention, each of the first connector, the second connector, the third connector, and the fourth connector may be a waterproof connector.

In this way, the waterproof connector is used as the first connector, the second connector, the third connector, and the fourth connector, and thus, it is possible to prevent water from entering the inside.

In the refrigeration vehicle according to the aspect of the present invention, a maintenance input/output port, a switch, and a power source connection plug which are electrically connected to the control board and protrude toward a side to which the controller is fixed may be provided in the second fixed plate.

In this way, the maintenance input/output port, the switch, and the power source connection plug which are electrically connected to the control board and protrude toward the side to which the controller is fixed are provided in the second fixed plate. Therefore, it is possible to dispose the maintenance input/output port, the switch, and the power source connection plug, which are used when maintenance is performed, at a position lower than the refrigerator unit body. Accordingly, it is possible to improve maintainability by the operator.

In the refrigeration vehicle according to the aspect of the present invention, the second connector may be disposed in an upper portion of the controller and a portion of the harness which is close to the fourth connector may have a curved portion disposed below the second connector so as to be hanged down from the fourth connector.

In this way, the harness includes the curved portion which is disposed below the second connector so as to be hanged down from the fourth connector, and thus, it is possible to drop water droplets, which is moving from the refrigerator unit body to the fourth connector via the harness, downward from the curved portion of the harness.

Accordingly, it is possible to prevent the water droplets from the refrigerator unit body from being introduced to the fourth connector.

In the refrigeration vehicle according to the aspect of the present invention, the position adjustor may be a slide mechanism which is provided on the front surface of the front wall and slides the controller.

In this way, the slide mechanism which is provided on the front surface of the front wall and slides the controller is used as the position adjustor. Therefore, the operator can move the controller to a position at which the operator easily operates the controller, and it is possible to improve the operability of the controller by the operator.

In the refrigeration vehicle according to the aspect of the present invention, the position adjustor may be a pair of magnets which is provided in a ball joint or each of the support member and the controller and is attracted to each other.

In this way, as the position adjustor, the pair of magnets which is provided in the ball joint or each of the support member and the controller and is attracted to each other is used, and thus, it is possible to adjust the position of the controller with respect to the refrigerator unit body.

In order to achieve to the above-described object, according to another aspect of the present invention, there is provided a refrigerator unit including: a refrigerator unit body which includes a box body and a control board accommodated in the box body; a controller which is disposed below the refrigerator unit body and is electrically connected to the control board; a support member which extends downward from the refrigerator unit body and supports the controller; and a position adjustor which is installed between a lower end portion of the support member and the controller and adjusts a position of the controller with respect to the refrigerator unit body such that the controller does not protrude from the refrigerator unit body when the refrigerator unit body is viewed from above.

In this way, as described above, the refrigerator unit body, the controller which is disposed below the refrigerator unit body and is electrically connected to the control board, and the support member which extends downward from the refrigerator unit body and supports the controller are provided, and thus, it is possible to decrease a height from the ground to the controller. Accordingly, it is possible to improve the operability of the controller by the operator.

The position adjustor is provided, which can adjust the position of the controller with respect to the refrigerator unit body such that the controller does not protrude from the refrigerator unit body when the refrigerator unit body is viewed from above. Therefore, the position of the operation panel of the controller can be directed toward a position at which the operator easily performs the operation or it is possible to adjust the height of the controller. Therefore, it is possible to improve the operability of the controller by the operator.

According to the present invention, it is possible to improve the operability of the controller by the operator.

### BRIEF DESCRIPTION OF THE DRAWINGS

FIG. 1 is a side view showing a schematic configuration of a refrigeration vehicle according to a first embodiment of the present invention.
FIG. 2 is a view showing a refrigerator unit and a trailer body enclosed by a region A of the refrigeration vehicle shown in FIG. 1 in an enlarged manner and showing a refrigerator unit body and a trailer body in cross section.
FIG. 3 is a view when the refrigerator unit provided on a front wall is viewed from a tractor side and is for explaining a position of a control board in a box body and a position of a controller.
FIG. 4 is a plan view when the controller is viewed from an upper side of the refrigerator unit body shown in FIG. 2.
FIG. 5 is a side view of a structure body shown in FIG. 4.
FIG. 6 is a perspective view in which the controller shown in FIG. 5 and a first bracket and a second bracket constituting a position adjustor are exploded.
FIG. 7 is a view schematically showing a state where the controller shown in FIG. 4 is inclined to a right side of the refrigeration vehicle.
FIG. 8 is a plan view when a position adjustor according to a first modification example of the first embodiment of the present invention is viewed from the upper side of the refrigerator unit body and is a view when the position adjustor is inclined to a left side.
FIG. 9 is a sectional view of a refrigerator unit according to a second modification example of the first embodiment of the present invention.
FIG. 10 is a side view of a controller and a position adjustor constituting a refrigerator unit according to a third modification example of the first embodiment.
FIG. 11 is a sectional view showing a main portion of a refrigerator unit body of the related art in which a controller is disposed in a box body.
FIG. 12 is a sectional view schematically showing a state where the controller shown in FIG. 11 is taken out of the box body and an opening portion of the box body is closed with a closing panel.
FIG. 13 is a plan view when a structure body shown in FIG. 12 is viewed from a front surface side.
FIG. 14 is an exploded perspective view of a main portion of a refrigerator unit according to a second embodiment of the present invention and is a view schematically showing a state where a first bracket and a second bracket to which a controller is fixed are separated from each other.
FIG. 15 is a perspective view showing a state where the second bracket from which a maintenance input/output port, a switch, and a power source connection plug shown in FIG. 14 are removed, the first bracket, and the controller which is removed from the second bracket are separated from each other.
FIG. 16 is a plan view showing a surface of a second fixed plate on a side to which the maintenance input/output port and the switch shown in FIG. 14 are screwed.
FIG. 17 is a side view of a main portion (controller, position adjustor, and harness) of a refrigerator unit of a third embodiment of the present invention and is a view schematically showing a state where a second bracket and an operation panel of a controller are not inclined to a front surface of a front wall.
FIG. 18 is a perspective view showing a state where a first bracket, the second bracket, and the controller shown in FIG. 17 are separated from each other.
FIG. 19 is a side view showing a state where the second bracket and the operation panel of the controller shown in FIG. 17 are inclined downward.
FIG. 20 is a side view of a main portion (controller, position adjustor, and harness) of a refrigerator unit of a modification example of a third embodiment of the present invention and is a view schematically showing a state where a second bracket and an operation panel of a controller are inclined upward.
FIG. 21 is a plan view when a refrigerator unit according to a fourth embodiment of the present invention is viewed from a front surface side.
FIG. 22 is a side view showing a schematic configuration of a refrigeration vehicle according to a fifth embodiment of the present invention.

### DETAILED DESCRIPTION OF THE INVENTION

### (First Embodiment)

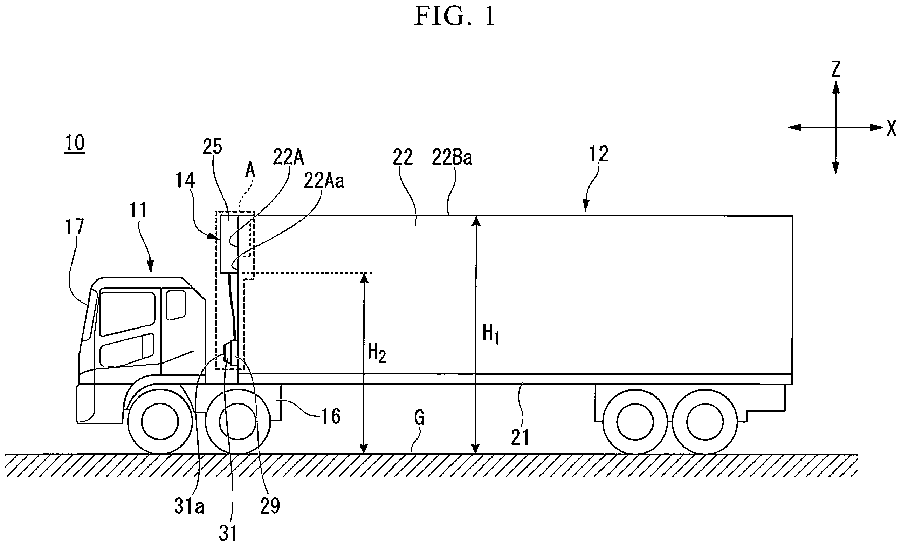

A refrigeration vehicle 10 of a first embodiment will be described with reference to FIGS. 1 to 3. In FIG. 1, a refrigerator unit 14 is shown in a simplified manner. In FIG. 1, an X direction indicates a longitudinal direction of the refrigeration vehicle 10 and a Z direction indicates a height direction of the refrigeration vehicle 10.

In FIG. 1, H₁ indicates a height (hereinafter, referred to a "height H₁") from a ground G to an outer surface 22Ba (upper surface) of a trailer 12 which is towed by a tractor 11, and H₂ indicates a height (hereinafter, referred to a "height H₂") from the ground G to a lower end of a refrigerator unit body 25.

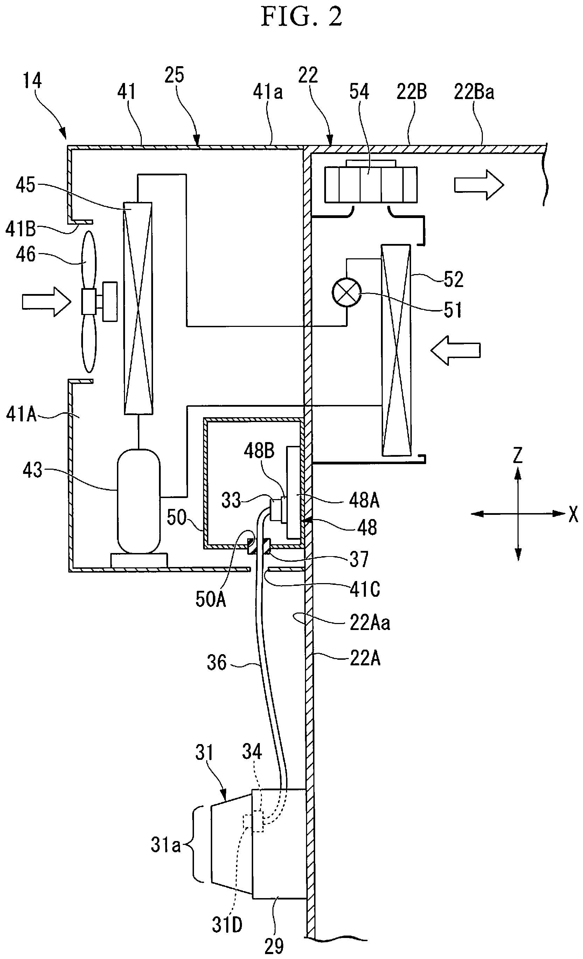

FIG. 2 schematically shows a controller 31 before an operation panel 31a is inclined to a front surface 22Aa of a front wall 22A. Three white arrows shown in FIG. 2 indicate directions in which air flows.

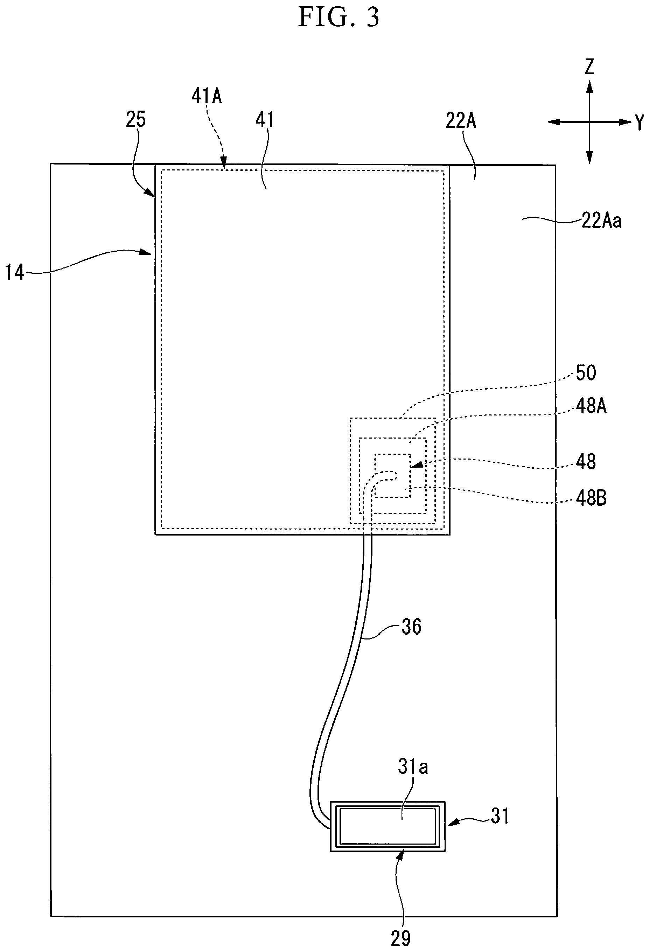

Similarly to FIG. 1, in FIG. 3, the refrigerator unit 14 is shown in a simplified manner. In FIG. 3, a Y direction indicates a direction orthogonal to the Z direction and indicates a width direction of the refrigeration vehicle 10. In FIGS. 1 to 3, the same reference numerals are assigned to the same constituent portions.

The refrigeration vehicle 10 includes the tractor 11, the trailer 12, and the refrigerator unit 14.

The tractor 11 includes a frame 16 and a cab 17.

The frame 16 extends in the X direction. A coupler (not shown) for connecting the trailer 12 is provided on an upper surface of a rear portion of the frame 16. The cab 17 which is an operator cab is provided in a front portion of the frame 16.

In the first embodiment, the following descriptions, a case where a left seat is an operator cab (in a case of a left handle) is described as an example. In the following descriptions, the left seat side is referred to a right side (may be simply referred to as a "right side") of the refrigeration vehicle 10, and a right seat side is referred to a left side (may be simply referred to as a "left side") of the refrigeration vehicle 10.

In the tractor 11 in the first embodiment, the cab 17 is disposed on a traveling engine (not shown). That is, the tractor 11 of the first embodiment exemplifies a so-called cab over type tractor. In the cab over type tractor 11, wheels are respectively provided on the front side and the rear side of the frame 16.

The tractor 11 configured as described above tows the trailer 12.

The trailer 12 includes a chassis 21 and a trailer body 22.

The chassis 21 extends in the X direction and a connection pin (not shown) is provided in a front portion of the chassis 21. The connection pin protrudes downward from the chassis 21. The connection pin can be inserted into or extracted from the coupler (not shown) of the above-described tractor 11. The connection pin is inserted into the coupler, and thus, the trailer 12 is connected to the tractor 11.

The trailer body 22 is a box type container which is supported by the chassis 21 from below. The trailer body 22 extends in the X direction and a space (which accommodates a cargo (not shown)) is formed inside the trailer body 22.

The trailer body 22 includes a front wall 22A which is disposed on the tractor 11 side and a top wall 22B which is connected to an upper end of the front wall 22A and extends in the X direction. The front wall 22A is disposed outside the trailer body 22 and includes a front surface 22Aa orthogonal to the X direction.

A front portion of the trailer body 22 is disposed on the frame 16 of the tractor 11 in a state where the trailer 12 is connected to the tractor 11. In the trailer body 22, in the state where the trailer 12 is connected to the tractor 11, a predetermined gap is formed between the front surface 22Aa of the front wall 22A of the trailer body 22 and a rear surface of cab 17.

For example, the height H₁ of the trailer 12 can be appropriately set within a range from 4.50 m to 4.95 m.

The refrigerator unit 14 includes the refrigerator unit body 25, a position adjustor 29, the controller 31, a third connector 33, a fourth connector 34, and a harness 36.

The refrigerator unit body 25 includes a box body 41, a compressor 43, an external heat exchanger 45, an external heat exchanger fan 46, a control box 50, a control board 48, a seal member 37, a decompression mechanism 51, an internal heat exchanger 52, and an internal heat exchanger fan 54.

The box body 41 is provided in an upper portion of the front surface 22Aa of the front wall 22A. The box body 41 includes an accommodation space 41A, an outside air intake port 41B, and an opening portion 41C.

The accommodation space 41A is formed inside the box body 41. The outside air intake port 41B is formed on a front surface side of the box body 41. The outside air intake port 41B is an opening portion through which air outside the box body 41 is taken into the accommodation space 41A.

The opening portion 41C is formed to penetrate a bottom portion of the box body 41. The controller is not disposed in the accommodation space 41A. The opening portion 41C is a hole through which the harness 36 passes.

In FIGS. 1 and 2, for example, a case where the box body 41 is provided such that a height of an upper surface 41a of the box body 41 and a height of an outer surface 22Ba of the top wall 22B are the same as each other is described. A position at which the box body 41 is provided is not limited to the position shown FIGS. 1 and 2 as long as the position is positioned at the upper portion of the front surface 22Aa of the front wall 22A.

The compressor 43 is disposed at a lower portion of the accommodation space 41A. The compressor 43 is connected to the internal heat exchanger 52 so as to be capable of receiving a refrigerant via the internal heat exchanger 52. The compressor 43 compresses the refrigerant via the internal heat exchanger 52. The compressor 43 is connected to the external heat exchanger 45 so as to be capable of supplying the compressed refrigerant to the external heat exchanger 45.

The external heat exchanger 45 cools the compressed refrigerant supplied from the compressor 43 using the outside supplied from the external heat exchanger fan 46. The external heat exchanger 45 is connected to the decompression mechanism 51 so as to be capable of supplying the cooled refrigerant to the decompression mechanism 51.

The external heat exchanger fan 46 supplies the air outside the box body 41 to the external heat exchanger 45.

For example, the height H₂ from the ground G to the lower end of the refrigerator unit body 25 fixed to the front surface 22Aa of the front wall 22A can be appropriately set within a range from 2.40 m to 2.85 m.

The control box 50 is fixed to the front surface 22Aa of the front wall 22A which is positioned on lower right side (left seat side which is a driver's seat) of the accommodation space 41A. The control box 50 is a box for accommodating the control board 48.

The control box 50 has an opening portion 50A at a portion facing the opening portion 41C. The harness 36 is disposed in the opening portion 50A.

The control board 48 is provided in the control box 50. The control board 48 is fixed to the control box 50. When the control board 48 is viewed from the tractor 11 side, the control board 48 is disposed on the lower right side (the left seat side which is the driver's seat) of the accommodation space 41A.

The control board 48 includes a control board body 48A and a first connector 48B.

The first connector 48B is provided in the control board body 48A. The first connector 48B is electrically connected to the control board body 48A.

The control board 48 is electrically connected to the controller 31. The control board 48 controls the refrigerator unit body 25 based on a command from the controller 31.

The seal member 37 is disposed to close a portion between a surface of the control box 50 defining the opening portion 50A and an outer surface of the harness 36 which is disposed in the opening portion 50A.

In this way, the seal member 37 is provided so as to close the opening portion 50A positioned outside the harness 36. Therefore, it is possible to prevent water droplets generated in the box body 41 from entering the control box 50.

The decompression mechanism 51 is disposed in a portion positioned near the front wall 22A and the top wall 22B in the space formed in the trailer body 22. The decompression mechanism 51 decompress the refrigerant cooled by the external heat exchanger 45. The decompression mechanism 51 is connected to the internal heat exchanger 52 so as to be capable of supplying the decompressed refrigerant to the internal heat exchanger 52.

The internal heat exchanger 52 is disposed in a portion positioned near the front wall 22A and the top wall 22B in the space formed in the trailer body 22. The internal heat exchanger 52 cools air in the trailer body 22 using the decompressed refrigerant.

The internal heat exchanger fan 54 is disposed in a portion positioned above the internal heat exchanger 52 in the space formed in the trailer body 22. The internal heat exchanger fan 54 supplies the air cooled by the internal heat exchanger 52 into the trailer body 22 to cool the inside space of the trailer body 22.

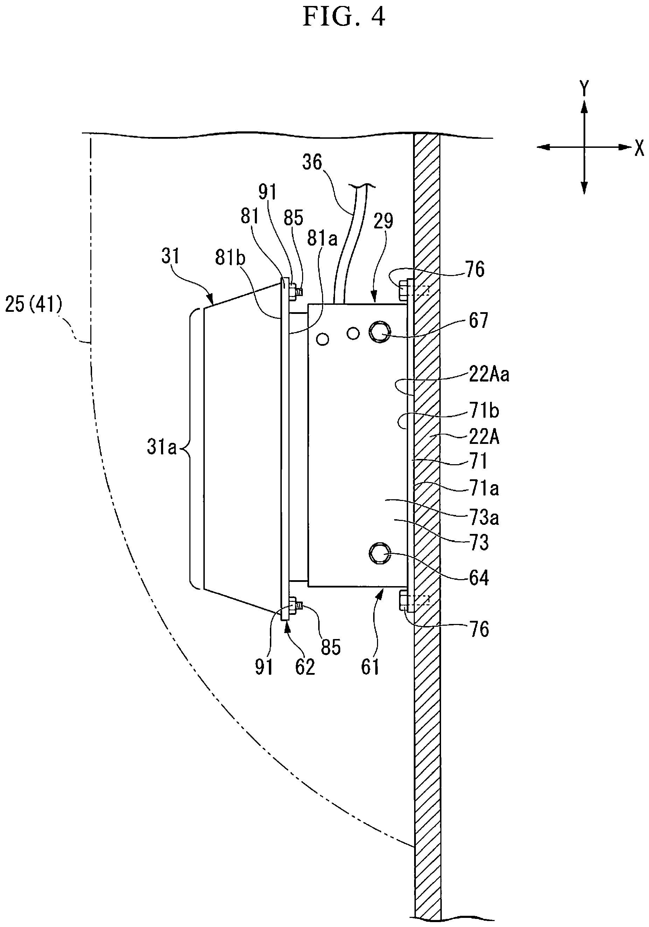

The position adjustor 29 will be described with reference to FIGS. 4 to 7. In FIGS. 1 to 7, the same reference numerals are assigned to the same constituent portions.

The position adjustor 29 includes a first bracket 61, a second bracket 62, bolts 64, 65, 67, and 68, and nuts 66.

The first bracket 61 is disposed to face the second bracket 62 in the X direction. The first bracket 61 includes a first fixed plate 71 and first protrusion plate portions 73 and 74.

The first fixed plate 71 is a rectangular plate material which has the Y direction as a longitudinal direction. The first fixed plate 71 includes a surface 71a which comes into contact with the front surface 22Aa of the front wall 22A, a surface 71b which is disposed on a side opposite to the surface 71a, and a plurality of screw holes 71A.

The surfaces 71a and 71b are surfaces orthogonal to the X direction.

A plurality of (in the case of the first embodiment, for example, two) screw holes 71A are provided in each of one end portion (right-side end portion) and the other end portion (left-side end portion) of the first fixed plate 71 in the Y direction.

The plurality of screw holes 71A formed in each end portion are disposed in the Z direction in a state of being separated from each other. A shaft portion of a screw 76 for fixing the first fixed plate 71 to the front wall 22A is disposed in each of the plurality of screw holes 71A.

The first fixed plate 71 is fixed to a lower right side of the front surface 22Aa of the front wall 22A, which is positioned in a lower portion of the refrigerator unit body 25, by the plurality of screws 76 from the surface 71b side. When the position adjustor 29 is viewed from the upper side of the refrigerator unit body 25, the first fixed plate 71 is disposed at a position at which the position adjustor 29 does not protrude to the outside of the refrigerator unit body 25 (box body 41).

The first protrusion plate portion 73 is provided in an upper portion of the surface 71b of the first fixed plate 71. The first protrusion plate portion 73 protrudes in a direction toward the second bracket 62 from the surface 71b of the first fixed plate 71. The first protrusion plate portion 73 is a rectangular plate material which has the Y direction as a longitudinal direction.

The first protrusion plate portion 73 includes an upper surface 73a, a lower surface 73b, and bolt holes 73A to 73D. The upper surface 73a and the lower surface 73b are surfaces which are orthogonal to the Z direction.

The bolt hole 73A is provided on one end portion (right-side end portion) of the first protrusion plate portion 73 in the Y direction. The bolt hole 73A is a hole into which a shaft portion of the bolt 64, which is used when the second bracket 62 is fixed to the first bracket 61, is inserted.

The bolt holes 73B to 73D are formed on the other end portion (left-side end portion) of the first protrusion plate portion 73 in the Y direction.

Among the bolt holes 73B to 73D, the bolt hole 73B is formed at a position closest to the surface 71b of the first fixed plate 71. The bolt hole 73B faces the bolt hole 73A in the Y direction.

Among the bolt holes 73B to 73D, the bolt hole 73D is formed at a position farthest from the surface 71b of the first fixed plate 71. The bolt hole 73C is disposed between the formation position of the bolt hole 73B and the formation position of the bolt hole 73D.

The bolt holes 73B to 73D are arranged on a curved line which is curved in a direction toward a right side of the refrigeration vehicle 10 from the bolt hole 73B.

The bolt holes 73B to 73D configured as described are holes into which a shaft portion of the bolt 67, which is used when the second bracket 62 is fixed to the first bracket 61, is inserted.

The bolt 67 is inserted into any one bolt hole among the bolt holes 73B to 73D.

The first protrusion plate portion 74 is provided in a lower portion of the surface 71b of the first fixed plate 71 and protrudes in the direction toward the second bracket 62 from the surface 71b of the first fixed plate 71. The first protrusion plate portion 74 is a rectangular plate material which has the Y direction as a longitudinal direction and faces the first protrusion plate portion 73 in the Z direction.

The first protrusion plate portion 74 includes an upper surface 74a, a lower surface 74b, and bolt holes 74A to 74D.

The upper surface 74a faces the lower surface 73b of the first protrusion plate portion 73. The upper surface 74a and the lower surface 74b are surfaces which are orthogonal to the Z direction.

The bolt hole 74A is formed on one end portion (right-side end portion) of the first protrusion plate portion 74 in the Y direction. The bolt hole 74A is formed at a position facing the bolt hole 73A in the Z direction.

The bolt hole 74A is a hole into which a shaft portion of the bolt 65, which is used when the second bracket 62 is fixed to the first bracket 61, is inserted.

The bolt holes 74B to 74D are formed on the other end portion (left-side end portion) of the first protrusion plate portion 74 in the Y direction.

The bolt hole 74B is formed at a position facing the bolt hole 73B in the Z direction. The bolt hole 74C is formed at a position facing the bolt hole 73C in the Z direction. The bolt hole 74D is formed at a position facing the bolt hole 73D in the Z direction.

The bolt holes 74B to 74D are arranged on a curved line which is curved in the direction toward a right side of the refrigeration vehicle 10 from the bolt hole 74B.

The bolt holes 74B to 74D configured as described are holes into which a shaft portion of the bolt 68, which is used when the second bracket 62 is fixed to the first bracket 61, is inserted.

The bolt 68 is inserted into the bolt hole (any one bolt hole among the bolt holes 74B to 74D) which is positioned below the bolt hole, into which the bolt 67 is inserted, among the bolt holes 73B to 73D.

The second bracket 62 includes a second fixed plate 81 and second protrusion plate portions 83 and 84.

The second fixed plate 81 is a rectangular plate material which has the Y direction as a longitudinal direction. The second fixed plate 81 includes a surface 81a, a surface 81b which is disposed on a side opposite to the surface 81a, a plurality of bolt holes 81A, and a penetrating portion 81B.

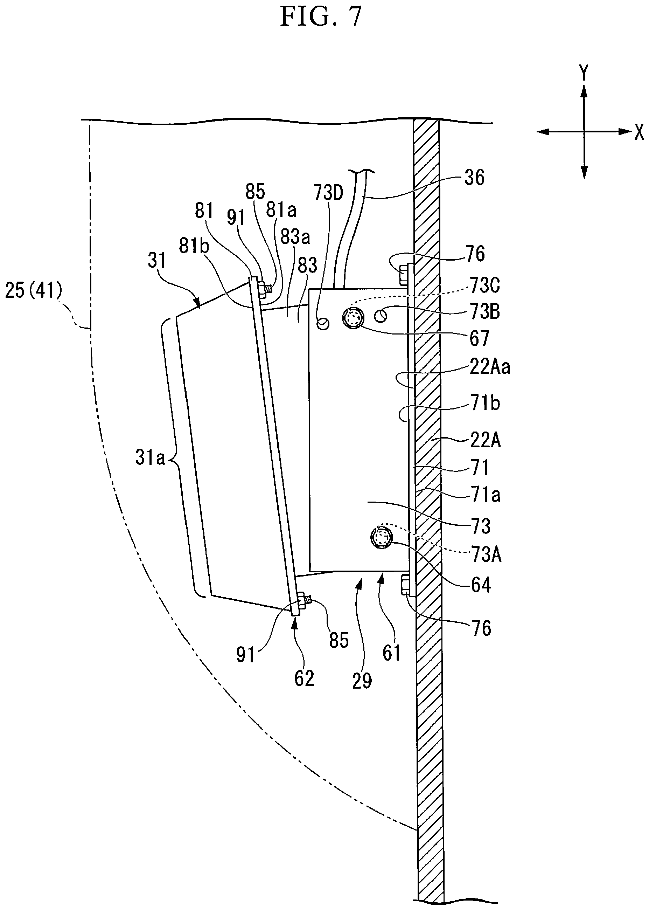

The surface 81a is a surface which is disposed on the surface 71b side of the first fixed plate 71 in the state where the second bracket 62 is fixed to the first bracket 61 (a state shown in Fig 4 or 7).

The surface 81b is a surface to which the controller 31 is fixed.

A plurality of (in the case of the first embodiment, for example, two) bolt holes 81A are provided in each of one end portion (right-side end portion) and the other end portion (left-side end portion) of the second fixed plate 81 in the Y direction.

The plurality of bolt holes 81A formed in each end portion are disposed in the Z direction in a state of being separated from each other. A shaft portion of a bolt 85 for fixing the controller 31 to the second fixed plate 81 is disposed in each of the plurality of bolt holes 81A.

The penetrating portion 81B is formed to penetrate the right-side upper portion of the second fixed plate 81. The penetrating portion 81B exposes a second connector 31D which is disposed in the upper portion of the controller 31. A portion of the fourth connector 34 which is electrically connected to the control board 48 and is mounted on the second connector 31D is disposed in the penetrating portion 81B.

In this way, the penetrating portion 81B for mounting the fourth connector 34 to the second connector 31D is formed in the second fixed plate 81, and it is possible to mount the fourth connector 34 (the connector for electrically connecting the control board 48) on the second connector 31D which is disposed on a rear surface side of the controller 31. Accordingly, it is possible to electrically connect the control board 48 and the controller 31 to each other.

The second protrusion plate portion 83 is provided in an upper portion of the surface 81a of the second fixed plate 81. The second protrusion plate portion 83 protrudes in a direction toward the first fixed plate 71 from the surface 81a of the second fixed plate 81. The second protrusion plate portion 83 is a rectangular plate material which has the Y direction as a longitudinal direction.

The second protrusion plate portion 83 includes an upper surface 83a, a lower surface 83b, and bolt holes 83A and 83B.

The upper surface 83a is in contact with the lower surface 73b of the first protrusion plate portion 73 in the state where the second bracket 62 is fixed to the first bracket 61.

The bolt hole 83A is formed on a right-side end portion of both end portions positioned in a longitudinal direction of the second protrusion plate portion 83. The shaft portion of the bolt 64 inserted into the bolt hole 73A is inserted into the bolt hole 83A.

In this state, a nut 66 is fastened to the shaft portion of the bolt 64 protruding downward from the lower surface 83b of the second protrusion plate portion 83. Accordingly, the right-side end portions of the first and second protrusion plate portions 73 and 83 are fixed to each other.

The bolt hole 83B is formed on a left-side end portion of both end portions positioned in the longitudinal direction of the second protrusion plate portion 83. The shaft portion of the bolt 67 inserted into any one bolt hole among the bolt holes 73B to 73D is inserted into the bolt hole 83B.

In this state, a nut 66 is fastened to the shaft portion of the bolt 67 protruding downward from the lower surface 83b of the second protrusion plate portion 83. Accordingly, the left-side end portions of the first and second protrusion plate portions 73 and 83 are fixed to each other.

The second protrusion plate portion 84 includes an upper surface 84a, a lower surface 84b, and bolt holes 84A and 84B.

The lower surface 84b is in contact with the upper surface 74a of the first protrusion plate portion 74 in the state where the second bracket 62 is fixed to the first bracket 61.

The bolt hole 84A is formed on the right-side end portion of both end portions positioned in the longitudinal direction of the second protrusion plate portion 84. The shaft portion of the bolt 65 inserted into the bolt hole 74A is inserted into the bolt hole 84A.

In this state, the nut 66 is fastened to the shaft portion of the bolt 65 protruding upward from the upper surface 84a of the second protrusion plate portion 84. Accordingly, the right-side end portions of the first and second protrusion plate portions 74 and 84 are fixed to each other.

The bolt hole 84B is formed on the left-side end portion of both end portions positioned in the longitudinal direction of the second protrusion plate portion 84. The shaft portion of the bolt 68 inserted into any one bolt hole among the bolt holes 74B to 74D is inserted into the bolt hole 84B.

In this state, the nut 66 is fastened to the shaft portion of the bolt 68 protruding downward from the upper surface 84a of the second protrusion plate portion 84. Accordingly, the left-side end portions of the first and second protrusion plate portions 74 and 84 are fixed to each other.

In the state where the second bracket 62 is fixed to the first bracket 61, a space 29A is formed between the first bracket 61 and the second bracket 62.

In this way, the space 29A is formed between the first bracket 61 and the second bracket 62. Therefore, the fourth connector 34 connected to the second connector 31D of the controller 31 and a portion of the harness 36 connected to the third connector 33 can be disposed in the space 29A.

In the position adjustor 29 configured as above, in a state (the state shown in FIG. 4) where the shaft portion of the bolt 67 is inserted into the bolt holes 73B and 83B, the shaft portion of the bolt 68 is inserted into the bolt holes 74B and 84B, and the second bracket 62 is fixed to the first bracket 61, the surface 81b of the second fixed plate 81 is parallel to the front surface 22Aa of the front wall 22A.

Accordingly, the operation panel 31a of the controller 31 fixed to the surface 81b of the second fixed plate 81 is not inclined to the front surface 22Aa of the front wall 22A.

In a state (state shown in FIG. 7) where the shaft portion of the bolt 67 is inserted into the bolt holes 73C and 83C, the shaft portion of the bolt 68 is inserted into the bolt holes 74C and 84C and the second bracket 62 is fixed to the first bracket 61, the second protrusion plate portions 83 and 84 are fixed to the first protrusion plate portions 73 and 74 by the bolts 64, 65, 67, and 68 in a state where positions of the second protrusion plate portions 83 and 84 with respect to the first protrusion plate portions 73 and 74 are shifted to the right side.

In this case, since the surface 81b of the second fixed plate 81 is inclined to the right side with respect to the front surface 22Aa of the front wall 22A, the operation panel 31a of the controller 31 fixed to the surface 81b of the second fixed plate 81 is inclined to the right side with respect to the front surface 22Aa of the front wall 22A.

Accordingly, in a case where the left seat is the driver's seat, the operator who gets off from the driver's seat can easily check the operation panel 31a of the controller 31 and can easily perform the operation. That is, it is possible to improve operability of the controller 31 by the operator.

When the shaft portion of the bolt 67 is inserted into the bolt holes 73D and 83D, the shaft portion of the bolt 68 is inserted into the bolt holes 74D and 84D, and the second bracket 62 is fixed to the first bracket 61, the surface 81b of the second fixed plate 81 is further inclined to the right side with respect to the front surface 22Aa of the front wall 22A than the state shown in FIG. 7.

Accordingly, the operation panel 31a of the controller 31 fixed to the surface 81b of the second fixed plate 81 is further inclined to the right side with respect to the front surface 22Aa of the front wall 22A. In this case, the operator who gets off from the driver's seat which is the left seat more can more easily check the operation panel 31a of the controller 31 and can more easily perform the operation.

According to the above-described method, the operation panel 31a of the controller 31 is inclined to the right side of the refrigeration vehicle 10 shown in FIG. 1 by the position adjustor 29.

Since the above-described bolt holes 73C, 73D, 83C, and 83D are provided, it is possible to adjust an inclination angle of the operation panel 31a of the controller 31 with respect to the front surface 22Aa of the front wall 22A. Accordingly, the operator can adjust the operation panel 31a of the controller 31 to an angle at which the operator can easily perform the check and the operation.

In the first embodiment, the case where the three bolt holes are formed in an arc shape on the left-side end portion of each of the first protrusion plate portions 73 and 74 is described as an example. However, the number of the bolt holes formed on the left-side end portion of each of the first protrusion plate portions 73 and 74 is not limited to three as long as the number is two or more.

In a case where four or more bolt holes are formed on each of the left-side end portions of the first protrusion plate portions 73 and 74, it is possible to more finely adjust the inclination angle with respect to the front surface 22Aa of the front wall 22A.

The controller 31 will be described with reference to FIGS. 1 to 7.

The controller 31 includes the operation panel 31a, a display screen 31A, operation buttons 31B, bolt holes 31C, and the second connector 31D.

The operation panel 31a is disposed on the tractor 11 side. The operation panel 31a is a surface corresponding to a front surface of the controller 31.

The display screen 31A is provided on the operation panel 31a. For example, a temperature in the trailer body 22, a driving situation of the refrigerator unit body 25, or the like is displayed on the display screen 31A.

A plurality of the operation buttons 31B are provided on the operation panel 31a. The operation buttons 31B are buttons which are used when the operator operates the controller 31.

When a structure body including the position adjustor 29 and the controller 31 is viewed from the upper side of the refrigerator unit body 25, the structure body in the state of being inclined with respect to the front surface 22Aa of the front wall 22A and the structure body in the state of not being inclined with respect to the front surface 22Aa of the front wall 22A are disposed at a position which does not protrude to the outside of the refrigerator unit body 25.

The structure body (the position adjustor 29 and the controller 31) is disposed to satisfy this condition. Therefore, it is possible to prevent the structure body from colliding with the tractor 11.

A plurality of (for example, in the first embodiment, two) bolt holes 31C are formed on each of both end portions of the controller 31 in the Y direction.

The plurality of bolt holes 31C are holes into which the shaft portions of the bolts 85 are inserted from the operation panel 31a side. The shaft portions of the bolts 85 inserted into the bolt holes 31C protrude from the surface 81a of the second fixed plate 81 in a state where the shaft portions are inserted into the bolt holes 81A. Nuts 91 are fastened to the shaft portions of the protruding bolts 85, and thus, the controller 31 is fixed to the second fixed plate 81.

The second connector 31D is provided in an upper portion of a rear surface side of the controller 31 which is a side opposite to the operation panel 31a. In a state where the controller 31 is fixed to the second fixed plate 81, the second connector 31D is exposed from the penetrating portion 81B.

The second connector 31D is a connector on which the fourth connector 34 electrically connected to the control board 48 is mounted in a state where the fourth connector 34 is be detachably attached to the second connector 32D.

As described above, in the controller 31, the operation panel 31a is inclined to the right side by the position adjustor 29.

The third connector 33 is provided on one end portion of the harness 36 which is electrically connected to the control board 48. The third connector 33 is mounted on the first connector 48B, and thus, is electrically connected to the control board 48. The third connector 33 is configured to be detachably attached to the first connector 48B.

For example, a waterproof connector can be used as the first and third connectors 48B and 33.

In this way, the waterproof connector is used as the first and third connectors 48B and 33, and thus, it is possible to prevent water from entering the inside of each of the first and third connectors 48B and 33.

The fourth connector 34 is provided on the other end portion of the harness 36 which is electrically connected to the controller 31. The fourth connector 34 is mounted on the second connector 31D, and thus, is electrically connected to the controller 31. The fourth connector 34 is configured to be detachably attached to the second connector 31D.

The second connector 31D is electrically connected to the first connector 48B by a structure body including the third connector 33, the fourth connector 34, and the harness 36. Accordingly, the control board 48 and the controller 31 are electrically connected to each other.

For example, a waterproof connector can be used as the second and fourth connectors 31D and 34.

In this way, the waterproof connector is used as the second and fourth connectors 31D and 34, and thus, it is possible to prevent water transmitted from the refrigerator unit body 25 to the harness 38 from entering the inside of each of the second and fourth connectors 31D and 34.

One end portion of the harness 36 is disposed in the box body 41 through the opening portion 41C and the other end portion thereof is disposed in the space 29A which is formed in the position adjustor 29.

A remaining portion (a portion except for one end portion and the other end portion) of the harness 36 is disposed between the refrigerator unit body 25 and the position adjustor 29. A length of the harness 36 can be appropriately set.

According to the refrigeration vehicle 10 of the first embodiment, compared to a case where the controller 31 is disposed in the box body 41 constituting the refrigerator unit body 25, the controller 31 which is electrically connected to the control board 48 is disposed on the front surface 22Aa of the front wall 22A positioned on the lower portion of the refrigerator unit body 25 (box body 41), and thus, it is possible to decrease a height from a ground G to the controller 31.

Accordingly, the operator easily accesses the controller, and it is possible to improve the operability of the controller 31 by the operator.

The position adjustor 29 which can adjust the position of the controller 31 with respect to the refrigerator unit body 25 is provided such that the controller 31 does not protrude from the refrigerator unit body 25 when the refrigerator unit body 25 is viewed from above. Therefore, it is possible to prevent the controller 31 from colliding with the tractor 11, and it is possible to incline the operation panel 31a of the controller 31 in the direction (the right side in the case of the first embodiment) in which the operator easily perform the operation. Accordingly, it is possible to further improve the operability of the controller by the operator.

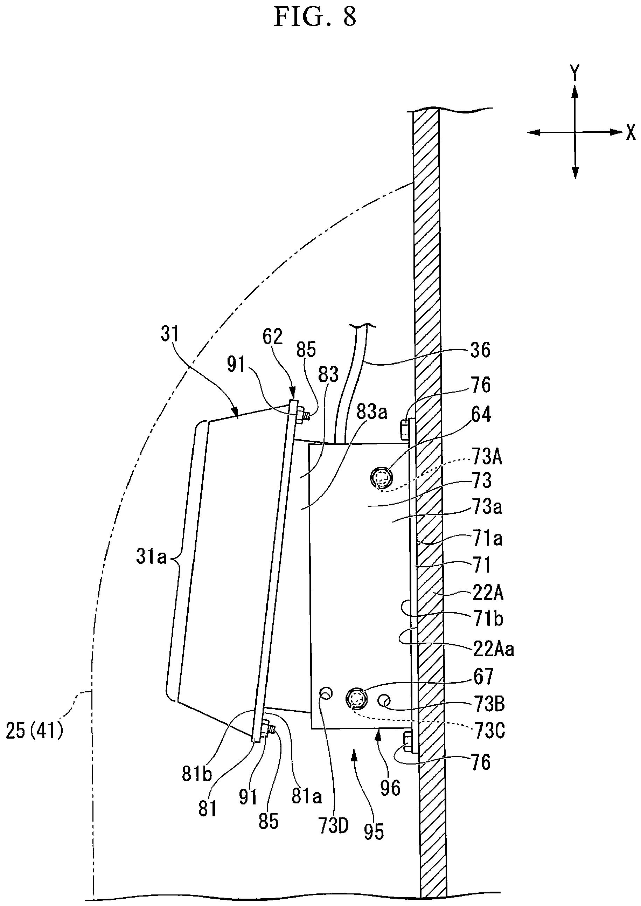

Next, a position adjustor 95 according to a first modification example of the first embodiment will be described with reference to FIG. 8. In FIG. 8, the same reference numerals are assigned to constituent portions which are the same as those of the structure body shown in FIG. 4.

The position adjustor 95 has the same configurations as those of the position adjustor 29 except that the position adjustor 95 has the first bracket 96 instead of the first bracket 61 described in the first embodiment and the position adjustor 95 is disposed on the left side (right seat side) of the front surface 22Aa of the front wall 22A positioned on a lower side of the refrigerator unit body 25 such that the position adjustor 95 does not protrude from the refrigerator unit body 25 in a plan view in which the refrigerator unit body 25 is viewed from above.

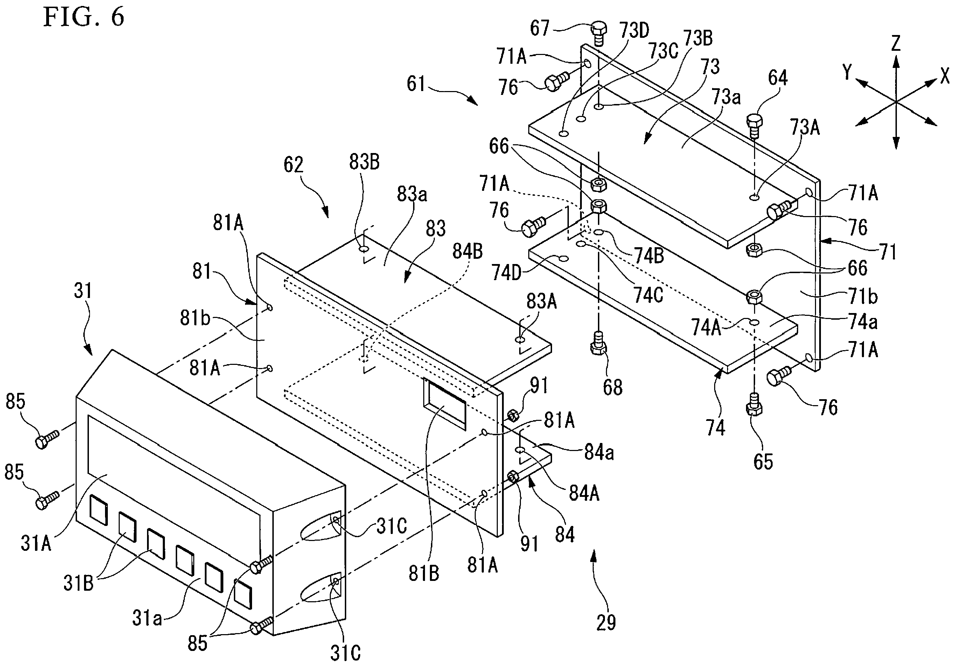

The first bracket 96 is configured similarly to the first bracket 61 except for the formation positions of the bolt holes 73A and 74A of the bolt holes 73B to 73D and 74B to 74D shown in FIG. 6 are replaced with each other.

According to the position adjustor 95 according to the first modification example of the first embodiment, the surface 81b of the second fixed plate 81 can be inclined to the left side with respect to the front surface 22Aa of the front wall 22A.

Accordingly, the operation panel 31a of the controller 31 attached to the second fixed plate 81 can be inclined to the left side.

Accordingly, for example, in a case where the right seat is the driver's seat (in a case of a right handle), it is possible to further improve the operability of the controller by the operator.

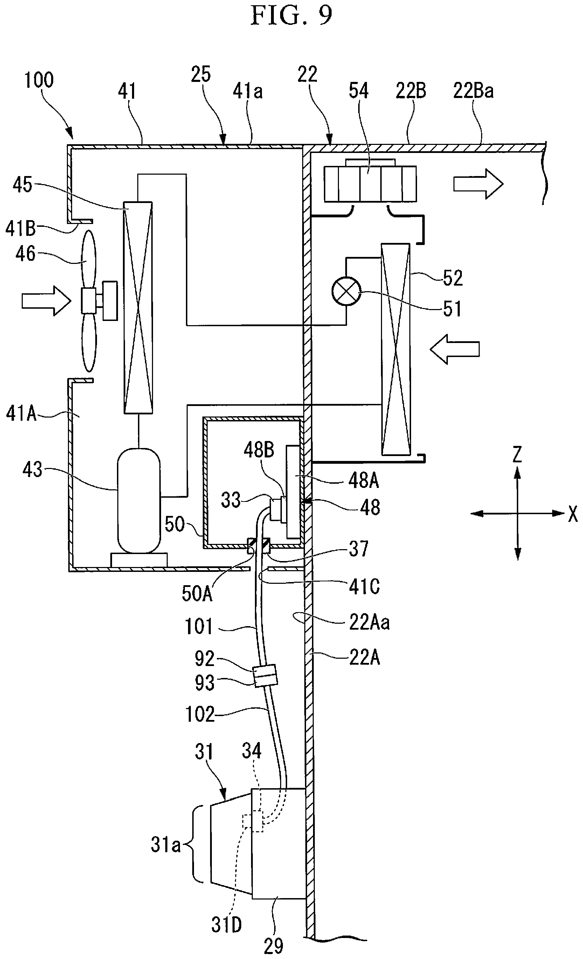

Next, a refrigerator unit 100 according to a second modification example of the first embodiment will be described with reference to FIG. 9. In FIG. 9, the same reference numerals are assigned to constituent portions which are the same as those of the structure body shown in FIG. 2.

The refrigerator unit 100 has the same configuration as that of the refrigerator unit 14 except that the refrigerator unit 100 has harnesses 101 and 102 and the connectors 92 and 93 instead of the harness 36 constituting the refrigerator unit 14 described in the first embodiment.

One end of the harness 101 is connected to the third connector 33 and the other end thereof is connected to the connector 92. One end side of the harness 101 is disposed in the box body 41. The other end side of the harness 101 is disposed outside the box body 41.

The connector 93 is mounted on the connector 92. The connector 93 is configured to be detachably attached to the connector 92.

For example, a waterproof connector can be used as the connectors 92 and 93. In this way, the waterproof connector is used as the connectors 92 and 93, and thus, it is possible to prevent water from entering the inside of each of the connectors 92 and 93.

One end of the harness 102 is connected to the connector 93 and the other end thereof is connected to the fourth connector 34.

A structure body including the harnesses 101 and 102 and the connectors 92 and 93 is electrically connected to the first connector 48B of the control board 48 and the second connector 31D of the controller 31.

According to the refrigerator unit 100 of the second modification example of the first embodiment, the structure body including the harnesses 101 and 102 and the connectors 92 and 93 is installed between the first connector 48B and the second connector 31D. Therefore, it is possible to change a distance between the connector 93 and the fourth connector 34 by replacing the structure body including the connector 93, the harness 102, and the fourth connector with the structure body which has a different length of the harness 102 and includes the connector 93, the harness 102, and the fourth connector. Accordingly, even in a case where the positions of the position adjustor 29 and the controller 31 are changed, it is possible to electrically connect the controller 31 and the control board 48 to each other.

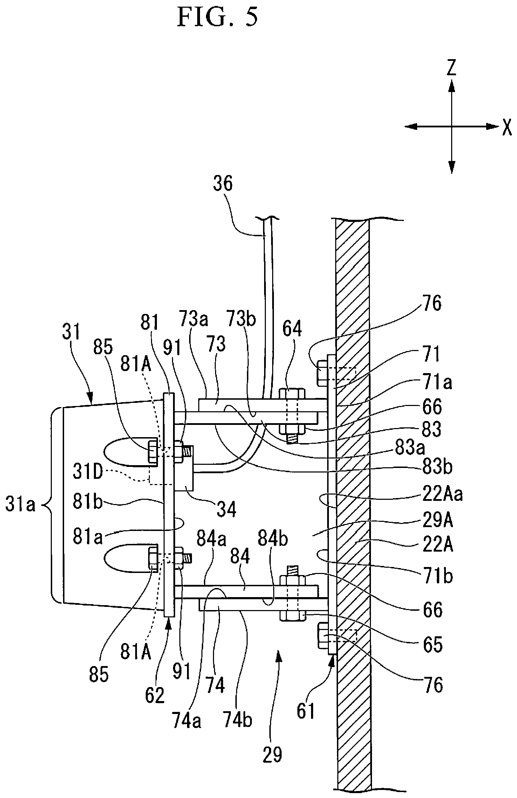

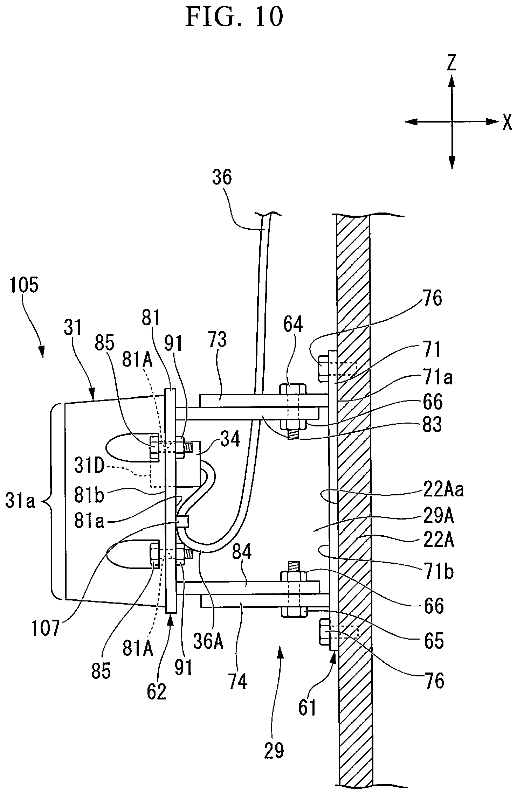

Next, a refrigerator unit 105 according to a third modification example of the first embodiment will be described with reference to FIG. 10. In FIG. 10, the same reference numerals are assigned to constituent portions which are the same as those of the structure body shown in FIG. 5.

The refrigerator unit 105 is configured similarly to the refrigerator unit 14 of the first embodiment except that a portion of the harness 36 being close to the second connector 31D is disposed below the second connector 31D and the portion is fixed by a harness fixing member 107 disposed on the surface 81a of the second fixed plate 81.

The harness 36 has a curved portion 36A which is disposed at a portion of the harness which is close to the fourth connector 34. The curved portion 36A is positioned below the second connector 31D so as to be hanged down from the fourth connector 34.

The harness fixing member 107 is provided on the surface 81a of the second fixed plate 81 positioned below the second connector 31D.

The harness fixing member 107 is a member for maintaining a shape of the curved portion 36A by fixing the harness 36 positioned below the second connector 31D.

According to the refrigerator unit 105 according to the third modification example of the first embodiment, the above-described curved portion 36A and the harness fixing member 107 are provided, and thus, it is possible to drop water droplets from a lower end of the curved portion 36A.

Accordingly, it is possible to prevent the water droplets via the harness 36 from moving to the fourth connector 34.

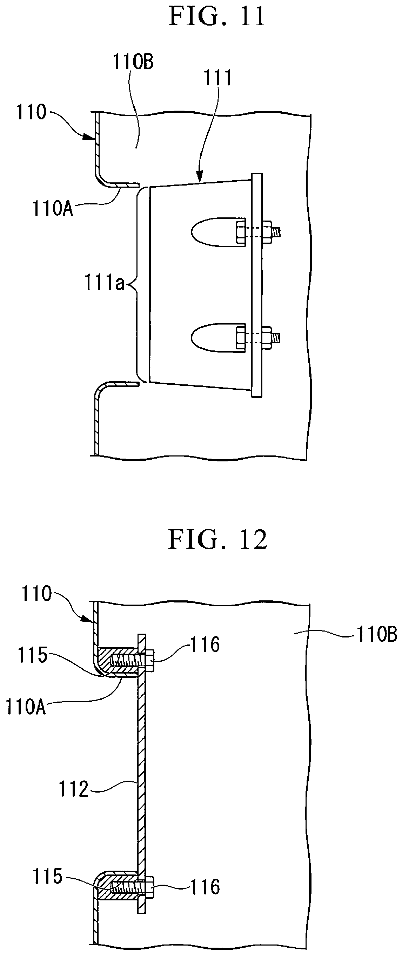

Here, with reference to FIGS. 11 to 13, a case where a controller 111 is taken out from an inside of a box body 110 of a refrigerator unit body of the related art which accommodates the controller 111 in the box body 110, the controller 111 is disposed below the box body 110, and thus, workability of the controller 111 of the operator is improved will be described.

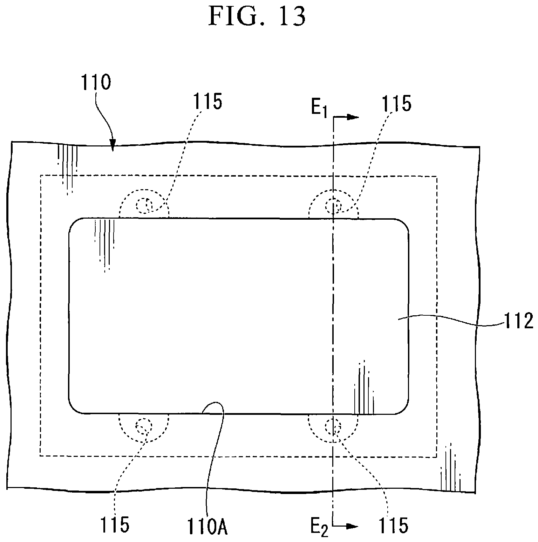

FIG. 11 shows only the box body 110 in cross section. A sectional view shown in FIG. 12 corresponds to a cross section taken along a direction of line E1 - E2 of a structure body shown in FIG. 13. In FIGS. 11 to 13, the same reference numerals are assigned to the same constituent portions.

In a case where the controller 111 is disposed in an accommodation space 110B formed in the box body 110, an opening portion 110A which exposes an operation panel 111a of the controller 111 is formed on a front surface side of the box body 110. The opening portion 110A is an opening portion for operating the operation panel 111a.

In a case where the controller 111 is disposed below the box body 110, the controller 111 does not exist in the box body 110, and thus, the opening portion 110A is not required.

In this case, insert nuts 115 may be provided inside the box body 110, and a closing panel 112 may be fixed to the box body 110 using bolts 116 penetrating the closing panel 112 which closes the opening portion 110A from the inside of the opening portion 110A.

### (Second Embodiment)

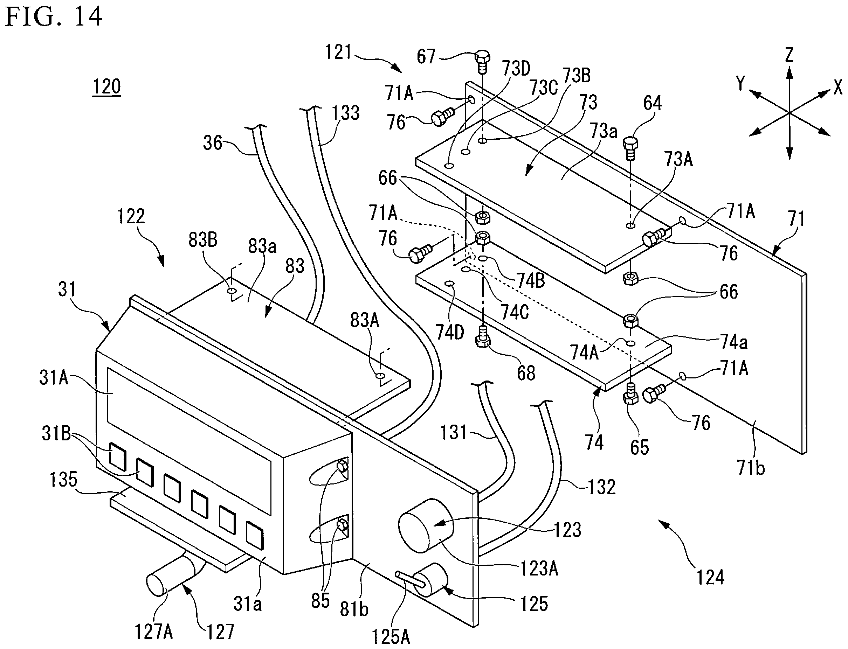

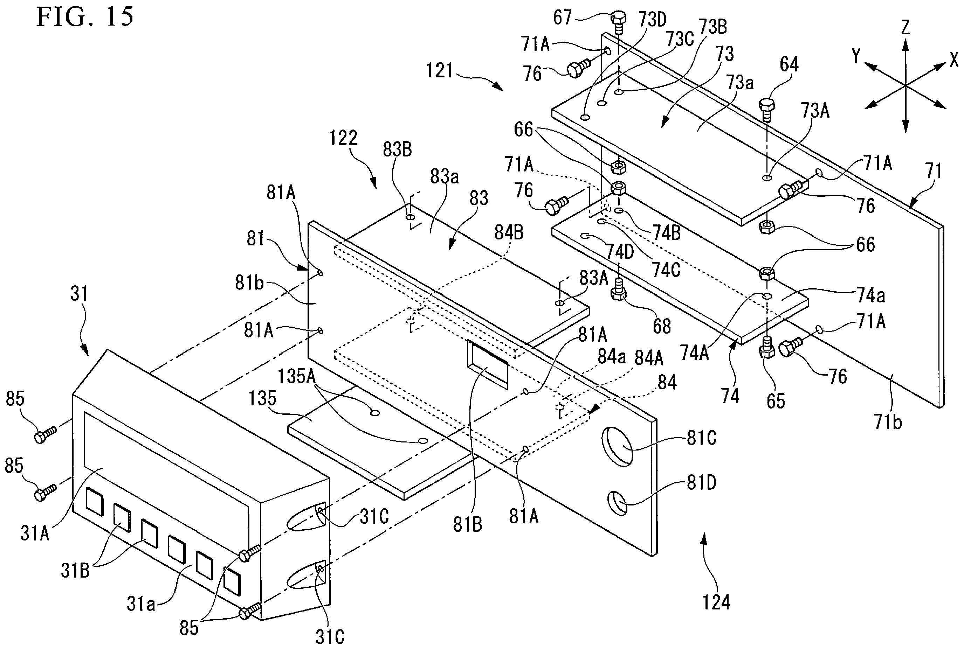

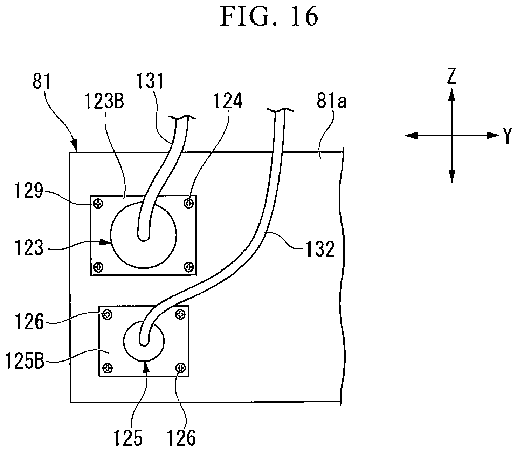

A refrigerator unit 120 according to a second embodiment of the present invention will be described with reference to FIGS. 14 to 16. Some of components of the refrigerator unit 120 are shown in FIG. 14. In FIG. 14, the same reference numerals are assigned to constituent portions which are the same as those of the structure body shown in FIG. 6. In FIGS. 14 to 16, the reference numerals are assigned to the same constituent portions.

The refrigerator unit 120 is configured similarly to the refrigerator unit 14 except that a position adjustor 124 is provided instead of the position adjustor 29 constituting the refrigerator unit 14 of the first embodiment, and a maintenance input/output port 123, a switch 125, a power source connection plug 127, and harnesses 131 to 133 are provided.

The position adjustor 124 includes a first bracket 121, a second bracket 122, the bolts 64, 65, 67, and 68, and nuts 66.

The first bracket 121 is configured similarly to the first bracket 61 except that a right-side portion of the first fixed plate 71 extends in the Y direction.

The second bracket 122 is configured similarly to the second bracket 62 except that a right-side portion of the second fixed plate 81 extends in the Y direction, through-holes 81C and 81D are formed on a right-side end portion of the second fixed plate 81, and a power source fixed plate 135 is provided.

The power source fixed plate 135 is provided on a lower end of the second fixed plate 81 and extends to protrude from the surface 81b of the second fixed plate 81. Screw holes 135A are formed on the power source fixed plate 135. Shaft portions of screws (not shown) for fixing the power source connection plug 127 to the power source fixed plate 135 are disposed in the screw holes 135A.

The first bracket 61 and the second bracket 62 configured as described above are fixed to each other by the bolts 64, 65, 67, and 68, and the nuts 66.

The maintenance input/output port 123 includes a connection portion 123A and a flange portion 123B.

The connection portion 123A protrudes in a direction orthogonal to the flange portion 123B. The connection portion 123A is inserted into the through-hole 81C from the surface 81a side of the second fixed plate 81. Accordingly, the connection portion 123A protrudes from the surface 81b of the second fixed plate 81.

The flange portion 123B is in contact with the surface 81a of the second fixed plate 81. The flange portion 123B is fixed to the second fixed plate 81 from the surface 81a side of the second fixed plate 81 by a plurality of screws 129.

The switch 125 includes a switching portion 125A and a flange portion 125B.

The switching portion 125A protrudes in a direction orthogonal to the flange portion 125B. The switching portion 125A is inserted into the through-hole 81D from the surface 81a side of the second fixed plate 81. Accordingly, the switching portion 125A protrudes from the surface 81b of the second fixed plate 81. The flange portion 125B is in contact with the surface 81a of the second fixed plate 81. The flange portion 125B is fixed to the second fixed plate 81 from the surface 81a of the second fixed plate 81 by a plurality of screws 126.

The switch 125 switches on/off of the refrigerator unit body shown in FIG. 2.

The power source connection plug 127 is fixed to the power source fixed plate 135 by a screw. The connection portion 127A of the power source connection plug 127 protrudes from the power source fixed plate 135. An external power source plug (not shown) is connected to the connection portion 127A. The external power source plug is connected to the connection portion 127A, and thus, power is supplied from the outside.

One end of the harness 131 is electrically connected to the control board 48 shown in FIG. 2 and the other end thereof is connected to the maintenance input/output port 123. The harness 131 electrically connects the control board 48 and the maintenance input/output port 123 to each other.

One end of the harness 132 is electrically connected to the control board 48 shown in FIG. 2 and the other end thereof is connected to the switch 125. The harness 132 electrically connects the control board 48 and the switch 125 to each other.

One end of the harness 133 is electrically connected to the control board 48 shown in FIG. 2 and the other end thereof is connected to the power source connection plug 127. The harness 133 electrically connects the control board 48 and the power source connection plug 127 to each other.

According to the refrigerator unit 120 according to the second embodiment, the maintenance input/output port 123, the switch 125, and the power source connection plug 127 which are electrically connected to the control board 48 are provided on the second fixed plate 81, the maintenance input/output port 123, the switch 125, and the connection portions 123A and 127A and the switching portion 125A of the power source connection plug 127 protrude to the surface 81b side of the second fixed plate 81, and thus, it is possible to dispose the maintenance input/output port 123, the switch 125, and the power source connection plug 127, which are used when the maintenance is performed, at positions lower than the refrigerator unit body 25 shown in FIG. 2. Accordingly, it is possible to maintainability by the operator.

### (Third Embodiment)

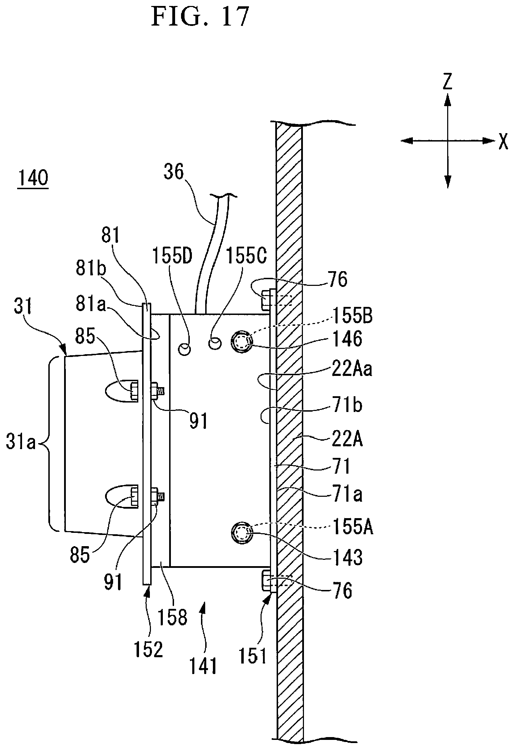

A refrigerator unit 140 according to a third embodiment of the present invention will be described with reference to FIGS. 17 to 19. In FIG. 17, some (specifically, controller 31, harness 36, and position adjustor 291) of components of the refrigerator unit 140 are shown. In FIG. 17, the same reference numerals are assigned to constituent portions which are the same as those of the structure body shown in FIG. 5.

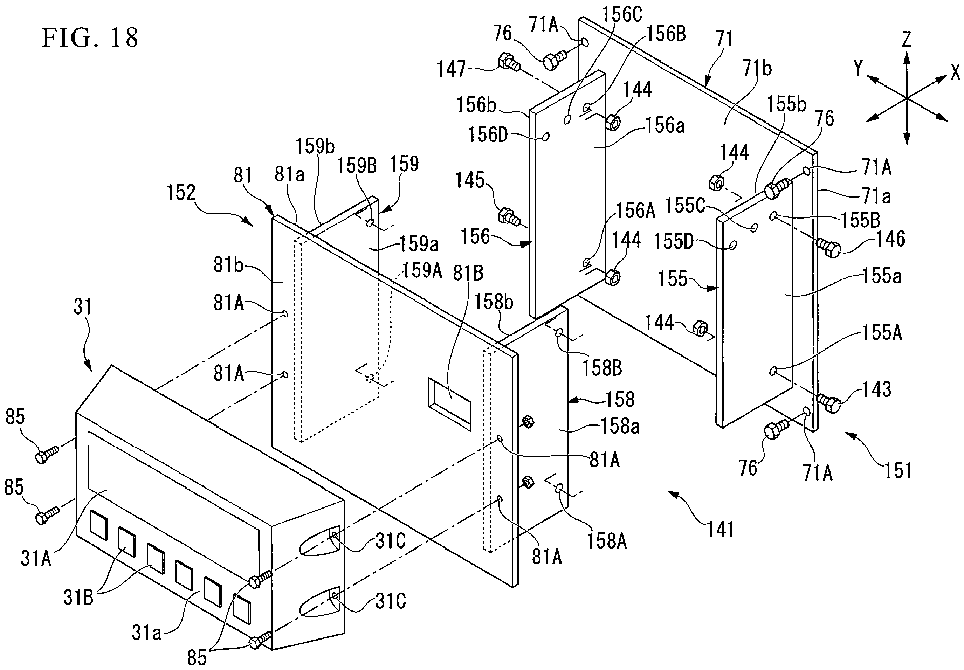

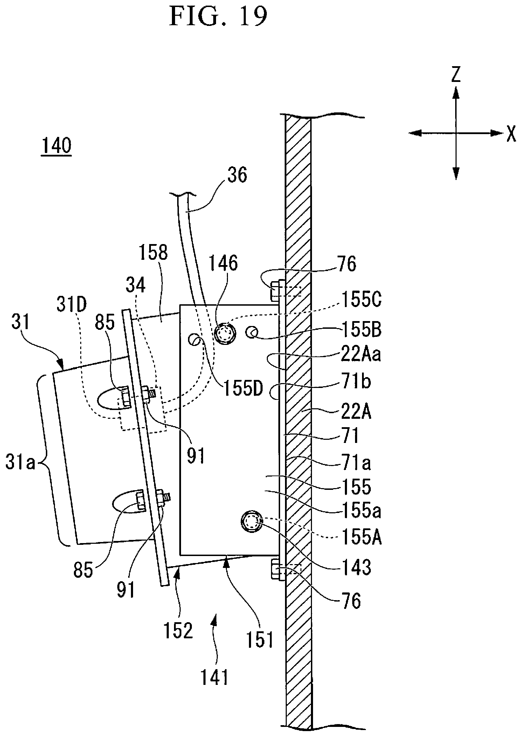

In FIG. 18, the same reference numerals are assigned to constituent portions which are the same as those of the structure body shown in FIGS. 6 and 17. In FIG. 19, the same reference numerals are assigned to constituent portions which are the same as those of the structure body shown in FIG. 17.

The refrigerator unit 140 is configured similarly to the refrigerator unit 14 except that the position adjustor 291 is provided instead of the position adjustor 29 constituting the refrigerator unit 14 of the first embodiment.

The position adjustor 291 includes a first bracket 151, a second bracket 152, bolts 143 and 145 to 147, and nuts 144.

The first bracket 151 is disposed to face the second bracket 152 in the X direction. The first bracket 151 is configured similarly to the first bracket 61 except that first protrusion plate portions 155 and 156 are provided instead of the first protrusion plate portions 73 and 74 constituting the first bracket 61 described in the first embodiment.

The first protrusion plate portion 155 is provided on a right-side portion of the surface 71b of the first fixed plate 71. The first protrusion plate portion 155 includes a right-side surface 155a, a left-side surface 155b, and bolt holes 155A to 155D.

The right-side surface 155a and the left-side surface 155b are surfaces orthogonal to the Y direction.

The bolt hole 155A is provided in a lower end portion of the first protrusion plate portion 155. The bolt hole 155A is a hole into which a shaft portion of the bolt 143 used when the second bracket 152 is fixed to the first bracket 151 is inserted.

The bolt holes 155B to 155D are formed on an upper end portion of the first protrusion plate portion 155. Among the bolt holes 155B to 155D, the bolt hole 155B is formed at a position closest to the surface 71b of the first fixed plate 71. The bolt hole 155B faces the bolt hole 155A in the Z direction.

Among the bolt holes 155B to 155D, the bolt hole 155D is formed at a position farthest from the surface 71b of the first fixed plate 71. The bolt hole 155C is disposed between a formation position of the bolt hole 155B and a formation position of the bolt hole 155D.

The bolt holes 155B to 155D are arranged on a curved line which is curved in a direction obliquely downward from the formation position of the bolt hole 155B.

The bolt holes 155B to 155D configured as described above are holes into which a shaft portion of a bolt 146 used when the second bracket 152 is fixed to the first bracket 151 is inserted. The bolt 146 is inserted into any one bolt hole among the bolt holes 155B to 155D.

The first protrusion plate portion 156 is provided on a left-side portion of the surface 71b of the first fixed plate 71. The first protrusion plate portion 156 protrudes from the surface 71b of the first fixed plate 71 toward the second fixed plate 81 of the second bracket 152. The first protrusion plate portion 156 is a rectangular plate material having the Z direction as a longitudinal direction and faces the first protrusion plate portion 155 in the Y direction.

The first protrusion plate portion 156 includes a right-side surface 155a, a left-side surface 155b, and bolt holes 156A to 156D.

The right-side surface 155a faces the left-side surface 155b of the first protrusion plate portion 155. The right-side surface 155a and the left-side surface 155b are surfaces orthogonal to the Y direction.

The bolt hole 156A is formed on a lower end portion of the first protrusion plate portion 156. The bolt hole 156A is formed at a position facing the bolt hole 155A in the Y direction.

The bolt hole 156A is a hole into which a shaft portion of the bolt 145 used when the second bracket 152 is fixed to the first bracket 151 is inserted.

The bolt holes 156B to 156D are formed on an upper end portion of the first protrusion plate portion 156. The bolt hole 156B is formed at a position facing the bolt hole 155B in the Y direction. The bolt hole 156C is formed at a position facing the bolt hole 155C in the Y direction. The bolt hole 156D is formed at a position facing the bolt hole 155D in the Y direction.

Accordingly, the bolt holes 156B to 156D are arranged on a curved line which is curved in a direction obliquely downward from the formation position of the bolt hole 156B.

The bolt holes 156B to 156D configured as described above are holes into which a shaft portion of the bolt 147 used when the second bracket 152 is fixed to the first bracket 151 is inserted.

The bolt 147 is inserted into a bolt hole (any one bolt hole among the bolt holes 156B to 156D) which is positioned in the Y direction of the bolt hole, into which the bolt 146 is inserted, among the bolt holes 155B to 155D.

The second bracket 152 is configured similarly to the second bracket 62 except that second protrusion plate portions 158 and 159 are provided instead of the second protrusion plate portions 83 and 84 constituting the second bracket 62 described in the first embodiment.

The second protrusion plate portion 158 is provided on a right-side portion of the surface 81a of the second fixed plate 81. The second protrusion plate portion 158 protrudes in a direction toward the first fixed plate 71 from the surface 81a of the second fixed plate 81. The second protrusion plate portion 158 is a rectangular plate material having the Z direction as a longitudinal direction.

The second protrusion plate portion 158 includes a right-side surface 158a, a left-side surface 158b, and bolt holes 158A and 158B.

In a state where the second bracket 152 is fixed to the first bracket 151, the right-side surface 158a is in contact with the left-side surface 155b of the first protrusion plate portion 155.

The bolt hole 158A is formed on a lower end portion of the second protrusion plate portion 158. The shaft portion of the bolt 143 inserted into the bolt hole 155A is inserted into the bolt hole 158A.

In this state, the nut 144 is fastened to the shaft portion of the bolt 143 protruding from the left-side surface 158b of the second protrusion plate portion 158. Accordingly, the lower end portions of the first and second protrusion plate portions 155 and 158 are fixed to each other.

The bolt hole 158 is formed on the upper end portion of the second protrusion plate portion 158. The shaft portion of the bolt 146 inserted into any one bolt hole among the bolt holes 155B to 155D is inserted into the bolt hole 158B.

In this state, the nut 144 is fastened to the shaft portion of the bolt 146 protruding from the left-side surface 158b of the second protrusion plate portion 158. Accordingly, the upper end portions of the first and second protrusion plate portions 155 and 158 are fixed to each other.

The second protrusion plate portion 159 includes a right-side surface 159a, a left-side surface 159b, and bolt holes 159A and 159B.

In the state where the second bracket 152 is fixed to the first bracket 151, the left-side surface 159b is in contact with the right-side surface 156a of the first protrusion plate portion 156.

The bolt hole 159A is formed on a lower end portion of the second protrusion plate portion 159. The shaft portion of the bolt 145 inserted into the bolt hole 156A is inserted into the bolt hole 159A. In this state, the nut 144 is fastened to the shaft portion of the bolt 145 protruding from the right-side surface 159a of the second protrusion plate portion 159. Accordingly, the lower end portions of the first and second protrusion plate portions 156 and 159 are fixed to each other.

The bolt hole 159B is formed on an upper end portion of the second protrusion plate portion 159. The shaft portion of the bolt 147 inserted into any one bolt hole among the bolt holes 156B to 156D is inserted into the bolt hole 159B.

In this state, the nut 144 is fastened to the shaft portion of the bolt 147 protruding from the right-side surface 159a of the second protrusion plate portion 159. Accordingly, the upper end portions of the first and second protrusion plate portions 156 and 159 are fixed to each other.

In the state where the second bracket 152 is fixed to the first bracket 151, a space is formed between the first bracket 151 and the second bracket 152.

In this way, the space is formed between the first bracket 151 and the second bracket 152, and thus, the fourth connector 34 connected to the second connector 31D of the controller 31 and a portion of the harness 36 can be disposed in the space.

In the position adjustor 291 configured as above, in a state (the state shown in FIG. 17) where the shaft portion of the bolt 146 is inserted into the bolt holes 155B and 158B, the shaft portion of the bolt 147 is inserted into the bolt holes 156B and 159B, and the second bracket 152 is fixed to the first bracket 151, the surface 81b of the second fixed plate 81 is parallel to the front surface 22Aa of the front wall 22A.

Accordingly, the operation panel 31a of the controller 31 fixed to the surface 81b of the second fixed plate 81 is not inclined to the front surface 22Aa of the front wall 22A.

In a state (state shown in FIG. 19) where the shaft portion of the bolt 146 is inserted into the bolt holes 155C and 158C, the shaft portion of the bolt 147 is inserted into the bolt holes 156C and 159C and the second bracket 152 is fixed to the first bracket 151, the second protrusion plate portions 158 and 159 are fixed to the first protrusion plate portions 155 and 156 by the bolts 143, 145, 146, and 147 in a state where positions of the second protrusion plate portions 158 and 159 with respect to the first protrusion plate portions 155 and 156 are shifted downward.

In this case, since the surface 81b of the second fixed plate 81 is inclined downward, the operation panel 31a of the controller 31 fixed to the surface 81b of the second fixed plate 81 is inclined downward.

Accordingly, for example, in a case where a height of the operator is low, the operator easily checks the operation panel 31a of the controller 31 or easily operates the operation panel 31a of the controller 31.

In a state where the shaft portion of the bolt 146 is inserted into the bolt holes 155D and 158D, the shaft portion of the bolt 147 is inserted into the bolt holes 156D and 159D, and the second bracket 152 is fixed to the first bracket 151, the operation panel 31a of the controller 31 is inclined further downward than the state shown in FIG. 19.

Accordingly, the operation panel 31a of the controller 31 fixed to the surface 81b of the second fixed plate 81 is inclined further downward. Accordingly, for example, in a case where the height of the operator is low, the operator more easily checks the operation panel 31a of the controller 31 or more easily operates the operation panel 31a of the controller 31.

According to this method, the operation panel 31a of the controller 31 is inclined downward by the position adjustor 291.

The above-described bolt holes 155C, 155D, 158C, and 158D are provided, it is possible to adjust an inclination angle of the operation panel 31a of the controller 31 with respect to the front surface 22Aa of the front wall 22A. Accordingly, the operator can adjust the operation panel 31a of the controller 31 to an angle at which the operator can easily perform the check and the operation.

In the position adjustor 291 configured as described above, in a plan view in which the position adjuster 291 is viewed from the upper side of the refrigerator unit body 25, the position adjustor 291 is disposed so as not to protrude from the refrigerator unit body 25.

In a plan view in which the controller 31 is viewed from the upper side of the refrigerator unit body 25 shown in FIG. 2, the position adjustor 291 adjusts the position (in this case, inclination angle) of the controller 31 with respect to the refrigerator unit body 25 such that the controller 31 does not protrude from the refrigerator unit body 25.

According to the refrigerator unit 140 of the third embodiment, the position adjustor 291 is provided, which inclines the operation panel 31a of the controller 31 downward such that the controller 31 does not protrude from the refrigerator unit body 25 when the refrigerator unit body 25 is viewed from above, and thus, for example, in a case where the height of the operator is low, the operator easily checks the operation panel 31a of the controller 31 or easily operates the operation panel 31a of the controller 31.

Accordingly, it is possible to improve the operability of the operation panel 31a of the controller 31 by the operator.

In the third embodiment, the case where the three bolt holes are formed in an arc shape on the upper end portion of each of the first protrusion plate portions 155 and 156 is described as an example. However, the number of the bolt holes formed on the upper end portion of each of the first protrusion plate portions 155 and 156 is not limited to three as long as the number is two or more.

In a case where four or more bolt holes are formed on each of the upper end portions of the first protrusion plate portions 155 and 156, it is possible to more finely adjust the inclination angle with respect to the front surface 22Aa of the front wall 22A.

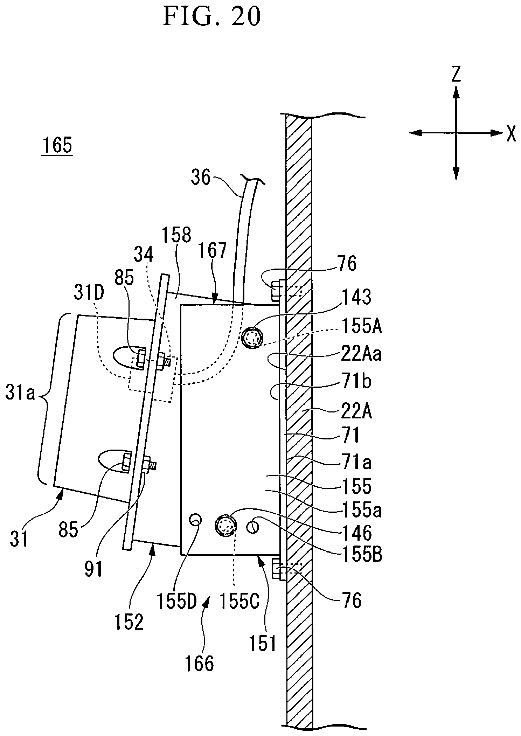

Next, a refrigerator unit 165 according to a modification example of the third embodiment will be described with reference to FIG. 20. In FIG. 20, the same reference numerals are assigned to constituent portions which are the same as those of the structure body shown in FIG. 19.

The refrigerator unit 165 is configured similarly to the refrigerator unit 140 except that a position adjustor 166 is provided instead of the position adjustor 291 constituting the refrigerator unit 140 of the third embodiment.

The position adjustor 166 is configured similarly to the position adjustor 291 except that a first bracket 167 is provided instead of the first bracket 151 constituting the position adjustor 291.

The first bracket 167 is configured similarly to the first bracket 151 except that the formation positions of the bolt hole 155A and the bolt holes 155B to 155D shown in FIG. 18 are replaced with each other and the formation positions of the bolt holes 156A and the bolt holes 156B to 156D shown in FIG. 18 are replaced with each other.

That is, the bolt holes 155B to 155D are provided on the lower end portion of the first protrusion plate portion 155 and the bolt holes 156B to 156D are provided on the lower end portion of the first protrusion plate portion 156. Accordingly, the operation panel 31a of the controller 31 is configured to be inclinable upward.

In a plan view in which the position adjustor 166 is viewed from the upper side of the refrigerator unit body 25 shown in FIG. 2, the position adjustor 166 is disposed so as not to protrude from the refrigerator unit body 25.

In the plan view in which the controller 31 is viewed from the upper side of the refrigerator unit body 25 shown in FIG. 2, the position adjustor 166 adjusts the position (in this case, inclination angle) of the controller 31 with respect to the refrigerator unit body 25 such that the controller 31 does not protrude from the refrigerator unit body 25.

According to the refrigerator unit 165 according to the modification example of the third embodiment, the bolt holes 155B to 155D are provided on the lower end portion of the first protrusion plate portion 155, the bolt holes 156B to 156D are provided on the lower end portion of the first protrusion plate portion 156, and thus, it is possible to incline the operation panel 31a of the controller 31 upward. Accordingly, the operator can easily check the operation panel 31a of the controller 31 or easily operate the operation panel 31a of the controller 31.

### (Fourth Embodiment)

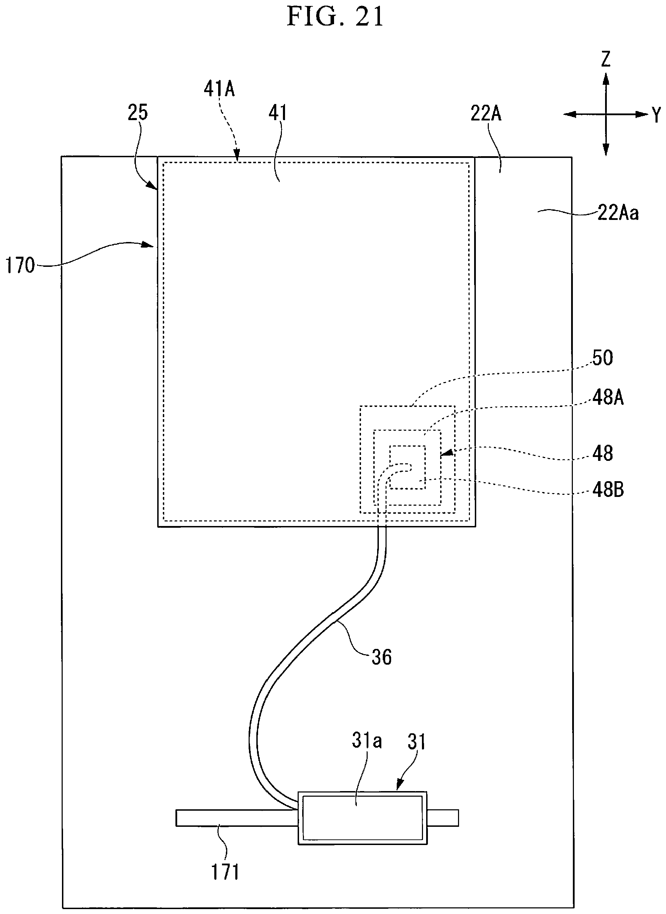

A refrigerator unit 170 according to a fourth embodiment of the present invention will be described with reference to FIG. 21. In FIG. 21, the same reference numerals are assigned to constituent portions which are the same as those of the structure body shown in FIG. 3.

The refrigerator unit 170 is configured similarly to the refrigerator unit 14 except that a position adjustor 171 is provided instead of the position adjustor 29 constituting the refrigerator unit 14 of the first embodiment.

The position adjustor 171 is provided in a lower portion of the front surface 22Aa of the front wall 22A which is positioned on the lower side of the refrigerator unit body 25. In a plan view in which the refrigerator unit body 25 is viewed from above, the position adjustor 171 extends in the Y direction so as not to protrude from the refrigerator unit body 25.

The position adjustor 171 supports the controller 31 in a state where the controller 31 is movable in the Y direction. For example, a slide mechanism can be used as the position adjustor 171.

In the plan view in which the refrigerator unit body 25 is viewed from above, the controller 31 moves in the Y direction so as not protrude from the refrigerator unit body 25.

According to the refrigerator unit 170 of the fourth embodiment, the position adjustor 171 which moves the controller 31 in the Y direction is provided, and thus, the operator can move the controller 31 to a position at which the operator easily operates the operation panel 31a of the controller 31. Accordingly, it is possible to easily check the operation panel 31a of the controller 31 or easily operate the operation panel 31a of the controller 31.

In the fourth embodiment, the case where the position adjustor 171 is disposed to extend in the Y direction is described as an example. The direction in which the position adjustor 171 extends may be the Z direction or may be a direction intersecting the Z direction and the Y direction.

### (Fifth Embodiment)

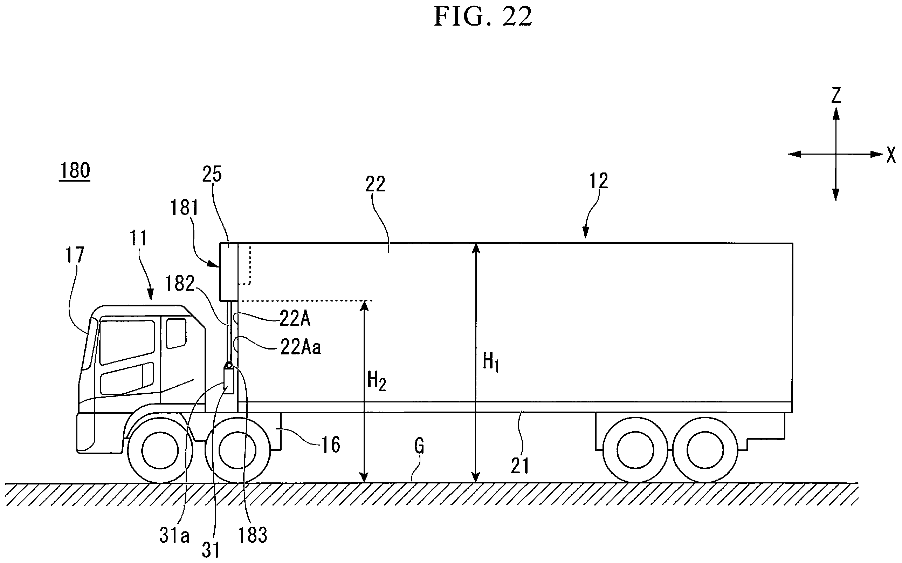

A refrigeration vehicle 180 according to a fifth embodiment of the present invention will be described with reference to FIG. 22. In FIG. 22, the same reference numerals are assigned to constituent portions which are the same as those of the structure body shown in FIG. 1.

The refrigeration vehicle 180 is configured similarly to the refrigeration vehicle 10 except that a refrigerator unit 181 is provided instead of the refrigerator unit 14 constituting the refrigeration vehicle 10 of the first embodiment.

The refrigerator unit 181 is configured similarly to the refrigerator unit 14 except that a position adjustor 183 is provided instead of the position adjustor 29 and a support member 182 is provided.

An upper end portion of the support member 182 is connected to the lower end of the refrigerator unit body 25. The support member 182 extends downward from the refrigerator unit body 25.

The position adjustor 183 is installed between a lower end portion of the support member 182 and the controller 31 so as to be capable of displacing the position of the controller 31. In a plan view in which the position adjustor 183 is viewed from the upper side of the refrigerator unit body 25, the position adjustor 183 is disposed so as not to protrude from the refrigerator unit body 25.

As the position adjustor 183, for example, it is possible to use a pair of magnets which is provided in a ball joint or the support member 182 and the controller 31, respectively and is attracted to each other.

The support member 182 supports the controller 31 via the position adjustor 183. The controller 31 is supported in a state of being separated from the front surface 22Aa of the front wall 22A.

In the plan view in which the controller 31 is viewed from the upper side of the refrigerator unit body 25, the position adjustor 183 adjusts the position of the controller 31 with respect to the refrigerator unit body 25 such that the controller 31 does not protrude from the refrigerator unit body 25.

According to the refrigerator unit 181 of the fifth embodiment configured as described above, effects similar to those of the refrigerator unit 14 of the first embodiment can be obtained.

In the fifth embodiment, instead of the position adjustor 183, any one position adjustor among the above-described position adjustors 29, 95, 124, 141, and 166 may be used.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### EXPLANATION OF REFERENCES

10, 180: refrigeration vehicle
11: tractor
12: trailer
14, 100, 105, 120, 140, 165, 170, 181: refrigerator unit
16: frame
17: cab
21: chassis
22: trailer body
22A: front wall
22Aa: front surface
22B: top wall
25: refrigerator unit body
29, 95, 124, 141, 166, 171, 183: position adjustor
29A: space
31, 111: controller
31a, 111a: operation panel
31A: display screen
31B: operation button
31C, 73A to 73D, 74A to 74D, 83A, 83B, 84A, 84B, 155A to 155D, 156A to 156D, 158A, 158B, 159A, 159B: bolt hole
31D: second connector
33: third connector
34: fourth connector
36, 101, 102, 131 to 133: harness
36A: curved portion
37: seal member
41, 110: box body
41A, 110B: accommodation space
41B: outside air intake port
41C, 50A, 110A: opening portion
43: compressor
45: external heat exchanger
46: external heat exchanger fan
48: control board
48A: control board body
48B: first connector
50: control box
51: decompression mechanism
52: internal heat exchanger
54: internal heat exchanger fan
61, 96, 121, 151, 167: first bracket
62, 122, 152: second bracket
64, 65, 67, 68, 85, 116, 143, 145 to 147: bolt
66, 91, 144: nut
71: first fixed plate
71a, 71b, 81a, 81b: surface
71A: screw hole
73, 74, 155, 156: first protrusion plate portions
73a, 74a, 83a, 84a: upper surface
73b, 74b, 83b, 84b: lower surface
76, 126, 129: screw
81: second fixed plate
81A: bolt hole
81B: penetrating portion
81C, 81D: through-hole
83, 84, 158, 159: second protrusion plate portion
92, 93: connector
107: harness fixing member
112: closing panel
115: insert nuts
123: maintenance input/output port
123A, 127A: connection portion
123B, 125B: flange portion
125: switch
125A: switching portion
124, 126: screw
127: power source connection plug
135: power source fixed plate
135A: screw hole
155a, 156a, 158a, 159a: right-side surface
155b, 156b, 158b, 159b: left-side surface
182: support member
A: region
G: ground
H₁, H₂: height

## Claims

1. A refrigeration vehicle (10,180) comprising:
a trailer (12) which has a trailer body (22) accommodating a cargo;
a tractor (11) which is configured to tow the trailer; and
a refrigerator unit (14,100,105,120,140,165,170,181) which is installed on a front surface of a front wall of the trailer body disposed on the tractor side and which is configured to cool an inside space of the trailer body, wherein the refrigerator unit includes
a refrigerator unit body (25) which has a box body (41) provided in an upper portion of the front surface of the front wall and a control board (48) accommodated in the box body,
a controller (31,111) which is disposed on the front surface of the front wall positioned on a lower portion of the refrigerator unit body, is electrically connected to the control board, and includes an operation panel (31a,111a), and
a position adjustor (29,95,124,141,166,171,183) which is configured to adjust a position of the controller with respect to the refrigerator unit body such that the controller does not protrude from the refrigerator unit body when the refrigerator unit body is viewed from above.

2. The refrigeration vehicle according to claim 1, further comprising:
a support member (182) which extends downward from the refrigerator unit body and supports the controller, wherein
the position adjustor (183) is installed between the support member and the controller.

3. The refrigeration vehicle according to claim 1 or 2, wherein the position adjustor includes
a first bracket (61,96, 121,151,167) which is fixed to a lower portion of the front surface of the front wall, and
a second bracket (62,122,152) to which the controller is fixed and of which a side opposite to a side to which the controller is fixed is fixed to the first bracket such that the operation panel of the controller is inclined with respect to the front surface of the front wall.

4. The refrigeration vehicle according to claim 3, wherein the first bracket (61) includes
a first fixed plate (71) which is in contact with the front surface of the front wall and is fixed to the front wall, and
a first protrusion plate portion (73, 74,155,156) which protrudes in a direction toward the controller from a surface of the first fixed plate positioned on a side opposite to a surface of the first fixed plate which is in contact with the front surface of the front wall, wherein the second bracket includes
a second fixed plate (81) to which the controller is fixed, and
a second protrusion plate portion (83,84,158,159) which protrudes in a direction toward the first fixed plate from a surface of the second fixed plate positioned on a side opposite to a surface of the second fixed plate to which the controller is fixed and has a surface overlapping one surface of two surfaces disposed in a thickness direction of the first protrusion plate portion, and wherein
the second protrusion plate portion is fixed to the first protrusion plate portion by a bolt in a state of being inclined to the first protrusion plate portion.

5. The refrigeration vehicle according to claim 4, wherein the first and second protrusion plate portions are disposed to face each other in a height direction of the trailer body.

6. The refrigeration vehicle according to claim 4, wherein the first and second protrusion plate portions are disposed to face each other in a width direction of the trailer body.

7. The refrigeration vehicle according to any one of claims 4 to 6, further comprising:
a harness (36,101,102,131-133) which electrically connects the control board and the controller to each other,
wherein the control board (48) includes a first connector (48B),
wherein the controller (31) includes a second connector (31D) on a side facing the second fixed plate (81),
wherein a third connector (33) is provided on one end portion of the harness so as to be mounted in a state of being detachably attached to the first connector,
wherein a fourth connector (34) is provided on the other end portion of the harness so as to be mounted in a state of being detachably attached to the second connector, and
wherein a penetrating portion (81B) which exposes the second connector is formed in the second fixed plate (81).

8. The refrigeration vehicle according to claim 7, wherein each of the first connector, the second connector, the third connector, and the fourth connector is a waterproof connector.

9. The refrigeration vehicle according to any one of claims 4 to 8, wherein a maintenance input/output port, a switch, and a power source connection plug which are electrically connected to the control board and protrude toward a side to which the controller is fixed are provided in the second fixed plate.

10. The refrigeration vehicle according to claim 7 or 8, wherein the second connector (31D) is disposed in an upper portion of the controller and
a portion of the harness which is close to the fourth connector has a curved portion disposed below the second connector so as to be hanged down from the fourth connector.

11. The refrigeration vehicle according to claim 1, wherein the position adjustor (171) is a slide mechanism which is provided on the front surface of the front wall and slides the controller.

12. The refrigeration vehicle according to claim 2, wherein the position adjustor (183) is a pair of magnets which is provided in a ball joint or each of the support member and the controller and is attracted to each other.

13. A refrigerator unit (14,100,105,120,140,165,170,181) comprising:
a refrigerator unit body (25) which includes a box body and a control board accommodated in the box body;
a controller (31,111) which is disposed below the refrigerator unit body and is electrically connected to the control board;
a support member which extends downward from the refrigerator unit body and supports the controller; and
a position adjustor (29,95,124,141,166,171,183) which is installed between a lower end portion of the support member and the controller and adjusts a position of the controller with respect to the refrigerator unit body such that the controller does not protrude from the refrigerator unit body when the refrigerator unit body is viewed from above.
